# EUROPEAN PATENT SPECIFICATION

(11) **EP 3 771 944 B1**
(45) Date of publication and mention of the grant of the patent: **27.07.2022**
(21) Application number: 19209778.0
(22) Date of filing: 18.11.2019
(51) Int. Cl.: G03B 21/14, G03B 21/12

(54) **HEATING APPLIANCE**
HEIZGERÄT
APPAREIL DE CHAUFFAGE

(30) Priority: 31.07.2019 CN 201910699128
(43) Date of publication of application: 03.02.2021
(73) Proprietor: Guangdong Midea Consumer Electric Manufacturing Co., Ltd., Shunde Foshan, Guangdong 528311 (CN)
(72) Inventor: Luo, Jinliusheng, Foshan, Guangdong 528311 (CN); Li, Baogang, Foshan, Guangdong 528311 (CN); Yang, Chao, Foshan, Guangdong 528311 (CN); Wang, Yunfeng, Foshan, Guangdong 528311 (CN); Guo, Yuanjiu, Foshan, Guangdong 528311 (CN); Diao, Fei, Foshan, Guangdong 528311 (CN)
(74) Representative: RGTH

(56) References cited:
- WO-A1-2018/093234
- CN-A- 107 149 404
- KR-A- 20170 037 122

## Description

### TECHNICAL FIELD

The present invention relates to the field of kitchen appliances, and specifically relates to a heating appliance.

### BACKGROUND

Heating appliances such as an electric kettle, a rice cooker and the like are becoming more and more common in daily life, and current heating appliances such as an electric kettle, a rice cooker and the like mostly display working state thereof by a LED (light-emitting diode) lamp, or display water temperature information and the like by a digital tube. With the development of projection technology, the projection technology has been applied to some of the kettle products, but the current products with projection technology set the outer casing to be transparent or translucent material, and at the same time dispose the projection box inside the product, and then project to the outer casing of the product. However, in this way, the user needs to observe the projection content through the outer casing of the kettle body, resulting in that the projection content viewed outside the outer casing of the kettle body is relatively fuzzy. At the same time, due to the limitation of the volume of the outer casing itself of the kettle body, disposing the projection box inside the product may result in that both the object distance and the image distance cannot be made relatively large due to the space limitation, so that the content of the projection cannot be made very large.

Therefore, how to propose a new heating appliance with an improved projection function has become an urgent problem to be solved.

WO 2018/093234 A1 provides an induction-heating cooking device having, *inter alia,* a projection unit and a reflection plate. The projection unit consists of a small projector and is able to display cooking information on the reflection plate disposed in the induction-heating cooking device. Therefore, the displayed information can be observed by a user through a transparent area of the top plate of the cooking device.

The kettle disclosed in CN 107 149 404 A having a projection function, which allows information such as temperature and time generated inside the kettle to be projected to the outside of the kettle through a projection imaging device, wherein the projection imaging device can be a convex lens.

KR 2017 0037122 A discloses a cooking auxiliary device of a cooking system that can project information related to cooking in the form of image on the surface of cooking containers placed on the cooking system. The projection is achieved by the image projection unit provided in the rotating part of the cooking auxiliary device, wherein the rotating part of the cooking auxiliary device can rotate relative to the cooking system.

### SUMMARY

The present invention aims to solve at least one of the technical problems existing in the prior art or related art.

Therefore, one object of the present invention is to provide a heating appliance.

In view of this, the embodiment of the first aspect of the present invention provides a heating appliance, comprising: an appliance body; and a projection assembly which is mounted on the appliance body and is able to project a projection toward the outside of the appliance body.

The heating appliance provided according to an embodiment of the present invention comprises the appliance body and the projection assembly, and the projection assembly is mounted on the appliance body. Herein, the projection assembly can be mounted either inside the appliance body or outside the appliance body. The projection assembly is able to project a projection toward the outside of the appliance body. That is, the projection assembly is able to perform projection directly outside the appliance body, so that the projection generated by the projection assembly is located outside the appliance body. That is, the projection assembly is able to generate the projection directly outside the appliance body, so that the user is able to directly view the projection generated by the projection assembly outside the appliance body. With this structure, since there is no block from the outer casing of the product when the user views the projection, the projection viewed by the user is clearer. In addition, with this structure, since the projection is outside, the position of the projection can be selected according to actual needs to determine the size of the projection, so that the product is able to adjust the size of the projection according to the actual needs of the user, and the size of the projection is not limited by the volume of the outer casing and the like of the appliance body, which improves the usage experience of the user.

Wherein, the outside of the appliance body comprises the outside surface of the appliance body and the space outside the appliance body.

In addition, the heating appliance provided according to the above embodiment provided by the present invention also has the following additional technical features:
In the above technical solution, the projection assembly comprises: a lens; a display apparatus which is able to emit projection light rays, irradiate the projection light rays onto the lens, and form a projection outside the appliance body by the lens.

In this technical solution, the projection assembly specifically comprises the lens and the display apparatus, and the lens is able to be mounted on the appliance body and is used to adjust the light rays, so that the size, the position, and the like of the projection is able to be adjusted. The display apparatus is provided with information to be projected such as characters or patterns to be projected, and the display apparatus is able to display contents to be projected thereon such as characters or patterns to be projected. The specific display principle may be a transmission display principle or a refraction display principle. Specifically, the contents that need to be displayed may be illuminated first, or other portions other than contents to be projected such as characters or patterns to be projected may be illuminated, so that the contents to be projected such as characters or patterns that need to be projected is able to be converted into projection light rays related to information to be projected to be highlighted. After the characters or patterns that need to be projected are highlighted by the projection light rays, the projection light rays are able to be irradiated onto the lens first, so that the projection is able to be formed when the light image passing through the lens is irradiated onto other objects, such as a screen or a cooktop. So far the projection display of characters or patterns to be projected is able to be achieved.

In the above technical solution, the display apparatus comprises a light transmitting member and a light emitting source; the light transmitting member is provided with information to be projected, the light emitting source, the light transmitting member, and the lens are sequentially spaced apart along the same direction, and light rays emitted by the light emitting source are able to be irradiated onto the light transmitting member, and are able to be irradiated onto the lens through the light transmitting member.

In these technical solutions, the display apparatus comprises the light transmitting member and the light emitting source, wherein the light transmitting member is provided with information to be projected, that is, provided with characters or patterns or the like that need to be projected. When mounting the light transmitting member, the light transmitting member is able to be mounted corresponding to the lens, so that light passing through the light transmitting member is able to be projected onto the lens. The light emitting source is used for emitting light. When being mounted, the light emitting source is able to be mounted on the appliance body corresponding to the light transmitting member, so as to illuminate the characters or patterns on the light transmitting member. The light that is irradiated onto the information to be projected is able to be irradiated onto the lens through the light transmitting member, and then the projection is able to be formed outside the product. With this structure, the light transmitting member and the light emitting source are two parts, which are able to make the structure of the light transmitting member more diverse. Of course, the light transmitting member and the light emitting source can also be one part, such as an integrated structure. When specifically disposing, the light emitting source, the light transmitting member, and the lens may be sequentially spaced apart along the same direction. For example, the light emitting source, the light transmitting member, and the lens may be sequentially spaced apart from the top down. That is, herein, the light emitting source, the light transmitting member, and the lens are preferably disposed on the same line. Of course, when a part such as a reflector is used, the light emitting source, the light transmitting member, and the lens may not be disposed on the same straight line.

Of course, in other solutions, projection can also be performed without the transmission principle, and can also be performed by the refraction principle of light.

In any one of the above technical solutions, preferably, the light transmitting member is made of light transmitting material, the light transmitting member is provided with opaque patterns or characters, or the light transmitting member is made of non-light transmitting material, the light transmitting member is provided with a light transmission hole, and the light transmission hole is able to form at least one character and/or at least one pattern.

In these technical solutions, on the one hand, the light transmitting member may be a transparent structure made of light transmitting material (such as transparent material). At this time, some opaque patterns and characters may be disposed on the light transmitting member to be the projection information to be projected. Thus, when the light emitted from the light emitting source is irradiated onto the light transmitting member, the place where the characters and the patterns are disposed cannot transmit light, but for the place where the characters and the patterns are not disposed, the light is able to be irradiated onto the lens through the light transmitting member. Thus, the characters and patterns after projection are able to be displayed in a shade manner. The opaque patterns and characters may preferably be made of a coating such as ink. Of course, the light transmitting member can also be made of non-light transmitting material. At this time, the information to be projected such as characters or patterns is able to be disposed on the light transmitting member in the form of a hole. For example, if a triangle needs to be projected, a triangular hole is able to be disposed on the light transmitting member. If a character needs to be projected, the corresponding character hole is able to be engraved on the light transmitting member. Thus, when the light emitted by the light emitting source is irradiated onto the light transmitting member, the light is able to pass through the holes corresponding to the character and the pattern. For the place where there is no character or pattern, the light of the light emitting source is blocked. Thus, when the light source passing through the hole is irradiated onto the projection surface such as a cooktop, the corresponding content is able to be projected, so that the characters and patterns which need to be projected are able to be displayed in a highlighted manner.

In another technical solution described above, preferably, the light transmitting member is a display screen on which the information to be projected is able to be displayed, and the heating appliance further comprises: an information supply member which is connected to the display screen, is able to transfer one or more kinds of the information to be projected to the display screen, and is able to change the information to be projected on the display screen.

In these technical solutions, the light transmitting member can also be disposed as a display screen, and the character and the pattern which need to be projected are able to be directly disposed on the display screen. Preferably, the information supply member is able to be disposed corresponding to the display screen, so that the display content on the display screen is able to be controlled to change by the information supply member, so as to achieve projection of different contents. Thus, various parameter contents such as real-time temperature and heating power of the product are able to be displayed in real time by the projection assembly, so that the user is able to know these parameter information of the product in real time. Herein, the information supply member may be specifically a part such as a circuit board or a sensor capable of communicating with the display screen.

In any one of the above technical solutions, preferably, the information supply member comprises a collecting apparatus and an electronic control board; wherein the collecting apparatus comprises one or more of a temperature detecting member, a TDS detecting apparatus, a movement sensor, a liquid level detecting member, and a pressure sensor.

In these technical solutions, the information supply member may be specifically a collecting apparatus and an electronic control board, and the collecting apparatus may be specifically one or more of a temperature detecting member, a TDS detecting apparatus, a movement sensor, a liquid level detecting member and a pressure sensor. Specifically, the display screen is able to be connected to the electronic control board or the collecting apparatus such as the temperature detecting member, the TDS detecting apparatus, and the like. Thus, the contents on the electronic control board, the temperature detecting member, the TDS detecting apparatus, and the like is able to be projected through the display screen, so that the parameters such as a temperature, a pressure, a TDS, a liquid level and a pressure of the product are able to be displayed in a projection manner for the user to view.

Wherein TDS is the total dissolved solids, that is, the TDS detecting apparatus here is used to detect how many milligrams of lysate is contained per liter of water. The fixed content here comprises the content of organic matter and inorganic matter.

In any one of the above technical solutions, the light transmitting member is provided with a plurality of areas, each of which is provided with information to be projected, and the light from the light emitting source is able to be irradiated onto at least one area on the light transmitting member; wherein the light transmitting member is able to move relative to the light emitting source, and the irradiation area of the light emitting source on the light transmitting member is able to be adjusted by the movement of the light transmitting member.

In these technical solutions, the light transmitting member is able to be divided into a plurality of areas, each of which is provided with the content that is able to be displayed in a projection manner. At the same time, the light transmitting member is able to be rotatably and/or slidably mounted on the appliance body. Thus, by the rotation of the light transmitting member, different information to be projected is able to be placed in the irradiation area of the light emitting source, so that the content of the projection display is able to be changed to achieve the projection display of various contents.

In any one of the above technical solutions, preferably, the plurality of areas on the light transmitting member are disposed along the circumferential direction of the light transmitting member, and the light transmitting member is rotatably mounted on the appliance body; or the plurality of areas on the light transmitting member are disposed along the lateral direction of the light transmitting member, and the light transmitting member is slidably mounted on the appliance body along the lateral direction.

In these technical solutions, on the one hand, a plurality of areas may be disposed along the circumferential direction of the light transmitting member, and the light transmitting member is rotatably mounted on the appliance body. Thus, the projection contents of the different areas are able to be placed under the irradiation area of the light emitting source by the rotation of the light transmitting member, so that the irradiation area of the light emitting source on the light transmitting member is able to be adjusted. On the other hand, a plurality of areas may be disposed along the lateral direction of the light transmitting member (for example, disposed in the horizontal direction), and the light transmitting member is slidably mounted on the appliance body along the lateral direction. Thus, the projection contents of the different areas are able to be placed under the irradiation area of the light emitting source by the lateral sliding of the light transmitting member, so that the irradiation area of the light emitting source on the light transmitting member is able to be adjusted.

In any one of the above technical solutions, preferably, the heating appliance further comprises: a driving member which is mounted on the appliance body and is able to be connected to the light transmitting member and drive the light transmitting member to move; wherein the driving member comprises a manual member and/or an electrical member.

In these technical solutions, the heating appliance further comprises a driving member which is mounted on the appliance body and connected to the light transmitting member, and is able to drive the light transmitting member to move so that different areas of the light transmitting member is able to be placed under the irradiation area of the light emitting source. The drive member here can be either an automatic member that is able to be moved by electrical or other manners, or a manual member that needs to be manually pushed. When the driving member comprises the manual member, it is preferable to expose a portion of the manual member outside the appliance body, so that the user is able to push the manual member to achieve the driving movement of the light transmitting member. Specifically, for example, the manual member is able to be completely disposed inside the appliance body, and then an operation window is provided on the appliance body so that at least a portion of the manual member is able to be exposed through the operation window. Of course, the manual member is able to also directly extend out of the operating window so that the portion of the manual member is able to be directly located outside the appliance body. When the driving member comprises the automatic member, the driving member is able to be completely hidden and mounted in the appliance body, and the automatic member does not need to be manually operated, thereby simplifying the workload of the user and improving the usage experience of the user.

In the first technical solution described above, preferably, the light transmitting member is rotatably mounted on the appliance body, the driving member comprises a manual member, the manual member comprises a plurality of protrusions which are spaced apart in the circumferential direction of the light transmitting member, and the plurality of protrusions are able to drive the light transmitting member to rotate.

In this technical solution, the manual member comprises a plurality of protrusions which are spaced apart in the circumferential direction of the light transmitting member. That is, herein a circle of protrusions is able to be directly disposed around the light transmitting member, and the portion of the protrusion is exposed outside the appliance body, so that the rotation of the light transmission member is able to be achieved by stirring the protrusion.

In the second technical solution described above, preferably, the light transmitting member is rotatably mounted on the appliance body, a plurality of first transmission gears are disposed in the circumferential direction of the light transmitting member, the driving member comprises a manual member, the manual member comprises a first rotary disk, the first rotary disk is rotatably mounted on the appliance body, at least a portion of the first rotary disk is exposed outside the appliance body, the first rotary disk is provided with a second transmission gear that cooperates with the first transmission gear, and the rotation of the first rotation disk is able to drive the light transmission member to rotate.

In this technical solution, a circle of the first transmission gears are disposed around the light transmitting member, and the manual member comprises the first rotary disk. The first rotary disk is provided with the second transmission gear that cooperates with the first transmission gear, so that the rotation of the first rotation disk is able to drive the light transmission member to rotate. Preferably, at least a portion of the first rotary disk is able to be exposed outside the appliance body so that the user is able to drive the light transmitting member by operating the first rotary disk.

In the third technical solution described above, preferably, the light transmitting member is rotatably mounted on the appliance body, the driving member comprises a manual member, the manual member comprises a second rotary disk and a connecting shaft, the second rotary disk is rotatably mounted on the appliance body, at least a portion of the second rotary disk is exposed outside the appliance body, and the connecting shaft is connected between the second rotary disk and the light transmitting member.

In these technical solutions, the second rotary disk may also be disposed corresponding to the light transmitting member, and then the connection between the second rotary disk and the light transmitting member is achieved by the connecting shaft, such that the rotational driving of the light transmitting member is able to be achieved by rotating the second rotary disk.

Wherein, in the above three solutions, the protrusion, the first rotary disk, and the second rotary disk are at least partially exposed outside, which means that the protrusion, the first rotary disk, and the second rotary disk are not completely sheltered by the appliance body, other than that the protrusion, the first rotary disk, and the second rotary disk must partially extend out of the appliance body. Herein, the protrusion, the first rotary disk, and the second rotary disk is able to be exposed through the hole of the appliance body. At this time, when the user operates, the hand or the tool is able to be inserted into the appliance body from the hole, and then the stirring of the protrusion, the first rotary disk, and the second rotary disk is able to be achieved.

In any one of the above technical solutions, preferably, the distance between the light transmitting member and the lens is v, and the focal length of the lens is f, wherein 2f>v>f.

In these technical solutions, the distance v between the light transmitting member and the lens is set between the focal length f of the lens and twice thereof, and the projection is able to be enlarged by the lens, thereby making the projection clearer.

In any one of the above technical solutions, preferably, the light emitting source is able to emit light of a plurality of colors or the light emitting source comprises a plurality of light sources of different colors.

In these technical solutions, the light emitting source is able to emit light of a plurality of colors, so that light of different colors are able to be projected. At the same time, the light emitting source is able to be disposed to comprise light sources of a plurality of colors, so that light sources of a plurality of colors are able to be utilized to emit light of a plurality of colors, so as to achieve colors of different color contents or to adjust the color of the projection.

In any one of the above technical solutions, preferably, the light emitting source, the light transmitting member, and the lens are mounted on the same straight line.

In these technical solutions, the light emitting source, the light transmitting member and the lens are preferably mounted on the same straight line, which are able to reduce the divergence of light and ensure the definition of the projection.

In any one of the above technical solutions, preferably, the light emitting source is a LED lamp.

In these technical solutions, the light emitting source preferably employs a LED lamp because the LED lamp is relatively energy saving and durable, thereby reducing the cost of the light emitting source and increasing the useful life thereof.

In any one of the above technical solutions, preferably, the lens is a convex lens or a plane mirror.

In these technical solutions, the lens is preferably a convex lens, so that the enlargement of the projection is able to be achieved by the convex lens. Of course, the lens can also be a plane mirror.

In any one of the above technical solutions, preferably, the heating appliance further comprises: a projection screen which is mounted on the appliance body and used for carrying the projection generated by the projection assembly.

In these technical solutions, a projection screen may be disposed outside the appliance body for specifically carrying the projected content. Such disposition is able to fix the location of the projection without projecting onto a desktop and the like, thereby reducing the influence of color chromatic aberration of the desktop and the like on projection display.

In any one of the above technical solutions, preferably, the appliance body comprises: a container body; a handle disposed on the container body, the projection assembly being mounted on the handle.

In these technical solutions, the appliance body comprises the container body and the handle. The projection assembly is preferably mounted on the handle, since the structure at the handle is relatively simple and for a product such as a kettle, the temperature at the handle is relatively low. Therefore, the projection assembly is disposed at the handle, so that the structure of the product is reasonable, and the projection assembly is able to be prevented from being overheated to some extent.

In any one of the above technical solutions, preferably, a mounting cavity is disposed in the handle, and the projection assembly is mounted in the mounting cavity; wherein the handle is provided with a through hole communicating with the mounting cavity, the lens is mounted at the through hole in a seal manner, or a light transmitting cover is mounted at the through hole; or at least a portion of casing of the handle is made of light transmitting material.

In these technical solutions, the mounting cavity is able to be disposed in the handle and then the projection assembly is able to be mounted in the mounting cavity, such that the hidden mounting of the projection assembly is able to be achieved by the handle. Specifically, in a specific embodiment, a through hole may be disposed on the handle to achieve the emission of light. At this time, on the one hand, the lens may be mounted at the through hole to achieve the block of the through hole, on the other hand, a light transmitting cover may be additionally disposed at the through hole. Of course, the through hole may not be disposed on the handle, and the handle may be directly disposed to be a light transmitting structure, or the portion corresponding to the lens of handle may be directly disposed to be a light transmitting structure.

In any one of the above technical solutions, preferably, the appliance body further comprises: a heating assembly mounted on the container body; and a power supply apparatus which is connected to the heating assembly and capable of supplying power to the heating assembly and the projection assembly.

In these technical solutions, the appliance body further comprises a heating assembly and the power supply apparatus, wherein the heating assembly is specifically for heating, and the power supply apparatus is primarily for supplying power. The power supply apparatus here may be a battery and the like, or may be a power plug that is able to be plugged into a socket at home.

In any one of the above technical solutions, preferably, the heating appliance further comprises: an adjustment assembly which is connected between the projection assembly and the power supply apparatus and used for adjusting current and voltage delivered to the projection assembly from the power supply apparatus.

In these technical solutions, the adjustment assembly is able to be disposed between the power supply apparatus and the projection assembly, for example between the power supply apparatus and the light emitting source, such that the adjustment assembly is able to specifically adjust voltage and current delivered to the light emitting source and the like from the power supply apparatus. In this way, the voltage and current on the light emitting source and the like are able to be ensured to meet the rated requirements, and the phenomenon that the light emitting source is burned out due to the excessive voltage and current does not occur.

In any one of the above technical solutions, preferably, the adjustment assembly comprises: a diode and a resistor, and both the diode and the resistor are connected in series between the projection assembly and the power supply apparatus; or the adjustment assembly comprises an electronic control board which is connected between the power supply apparatus and the projection assembly.

In these technical solutions, the adjustment assembly comprises the diode and the resistor. The rectification is able to be performed by connecting in series the diode on the loop of the light emitting source, while the voltage is able to be reduced by connecting in series the resistor. Thus, after rectification and voltage reduction of the diode and the resistor, voltages and currents required for the light emitting source and the like are able to be obtained. In another solution, when the product itself is provided with an electronic control board and the like, the power supply apparatus is able to be first connected to the electronic control board, and then the electronic control board supplies power to the light emitting source and the like. In this way, the control of the voltage and current is able to be achieved directly by the electronic control board, so that voltages and currents required for the light emitting source and the like are able to be obtained.

In another technical solution described above, preferably, the power supply apparatus is a power plug that is able to be connected to an external power supply, or the power supply apparatus is a battery.

In these technical solutions, a power plug is able to be disposed on the appliance body, so that the product is able to be supplied with power by a connection of the power plug with mains supply such as a socket at home. Of course, in another solution, a battery may be disposed on the appliance body, and then the light emitting source and the like of the projection assembly may be supplied with power by the battery.

In any one of the above technical solutions, preferably, the appliance body comprises a power switch, the power switch is connected to the projection assembly, when the power switch is turned on, the projection assembly is powered on to work, and when the power switch is turned off, the projection assembly is powered off and does not work.

In these technical solutions, a power switch is able to be disposed on the appliance body to achieve power-on control of the product, and at this time, the projection assembly is able to be directly connected to the power switch so that the synchronous opening or the synchronous closing of the projection assembly is able to be achieved directly by the power switch. Thus, the projection assembly is able to be powered on to work when the power switch is turned on, and the projection assembly is also powered off synchronously when the power switch is turned off.

In another technical solution described above, preferably, the heating appliance further comprises a projection switch which is connected to the projection assembly and is able to control the opening and closing of the projection assembly.

In these technical solutions, a projection switch is dedicatedly provided for the projection assembly, so that the individual control of the projection assembly is able to be achieved by the projection switch without bundling control with the power-on condition of the product. Thus, projection display can be performed when the product is completely powered off, or can be stopped during product operation, so that the opening and closing of the projection assembly is able to be more flexible and optional, without being affected by the power-on condition of the product itself.

In any one of the above technical solutions, preferably, the number of the projection assemblies is one or more.

In these technical solutions, the number of projection assemblies can be set according to needs, for example, it can be set as one, two or more. By disposing a plurality of projection assemblies, multiple projection displays are able to be achieved, thereby making the projection display of the product more complete and rich.

In any one of the above technical solutions, the projection assembly is movably mounted on the appliance body, and the projection size of the projection assembly and/or the projection angle of the projection assembly is able to be adjusted by the movement of the projection assembly.

In these technical solutions, the projection assembly is able to be movably mounted on the appliance body such that the projection angle and projection size of the projection assembly are able to be changed by the overall activity of the projection assembly to better satisfy the client needs. Specifically, the projection assembly is able to be either mounted on the appliance body in a vertically movable manner, or mounted on the appliance body in a laterally movable manner.

In any one of the above technical solutions, preferably, the heating appliance further comprises: an adjustment bracket mounted on the appliance body, and the projection assembly is mounted on the appliance body by the adjustment bracket; wherein the projection assembly is able to be driven to move by the adjustment bracket.

In these technical solutions, the adjustment bracket may be disposed on the appliance body, and then the disposition of the projection assembly is specifically adjusted by the adjustment bracket. The adjustment bracket is preferably disposed in the up and down direction to adjust the height of the projection assembly upward and downward. Of course, the adjustment bracket is able to also be disposed in the horizontal direction to achieve positional adjustment of the projection assembly in the horizontal direction.

Of course, in another solution, the adjustment bracket may not be disposed, and the projection assembly is directly movably mounted on the appliance body.

In any one of the above technical solutions, preferably, the adjustment bracket is movable in the longitudinal direction of the heating appliance to adjust the height of the projection assembly in the longitudinal direction of the appliance body; and/or the adjustment bracket is movable in the lateral direction of the heating appliance to adjust the position of the projection assembly in the lateral direction of the appliance body; and/or the adjustment bracket is rotatably mounted on the appliance body.

In these technical solutions, the adjustment bracket may preferably be disposed as a movable structure movable in the height direction, so that the height adjustment of the projection assembly in the longitudinal direction of the appliance body is able to be achieved by the movement of the adjustment bracket, so as to be able to change the projection distance and achieve the size adjustment of the projection. Of course, when it is necessary to laterally adjust the position of the projection assembly, the adjustment bracket is able to also be disposed as a structure movable in the lateral direction, to achieve positional adjustment of the projection assembly in the lateral direction of the appliance body. Furthermore, the adjustment bracket is able to also be rotatably mounted on the appliance body, so that the projection angle of the projection assembly is able to be adjusted.

In any one of the above technical solutions, preferably, the movement stroke of the adjustment bracket in the longitudinal direction of the heating appliance is greater than 0 mm and less than or equal to 30 mm; the adjustment bracket is vertically movable in the longitudinal direction of the heating appliance.

In these technical solutions, the stroke at which the adjustment bracket is able to move in the longitudinal direction should be neither too large, nor too small, and preferably in a range of greater than 0 mm and less than or equal to 30 mm, so that the height at which the projection assembly is able to be adjusted is relatively moderate. The adjustment bracket is preferably vertically movable in the longitudinal direction of the heating appliance, so that the vertical lift of the projection assembly in height is able to be achieved. Therefore, it is unnecessary to change the lateral position of the projection assembly, so that the projection assembly is able to still achieve the projection in the original position after adjustment. That is, this disposition will only change the size of the projection, and will not change the position of the projection.

In any one of the above technical solutions, preferably, the angle by which the adjustment bracket is able to be rotated is greater than 0° and less than or equal to 360°.

In these technical solutions, the angle by which the adjustment bracket is able to be rotated can be set between 0° and 360° according to actual needs, so that the adjustment bracket is able to be rotated and adjusted by a larger angle. Therefore, the projection assembly is able to be rotated to different directions to perform projection, so that the selection of the projection position is more flexible and convenient.

In any one of the above technical solutions, preferably, the appliance body comprises a handle in which a mounting cavity is disposed, the handle is provided with a through hole communicating with the mounting cavity, the adjustment bracket is mounted in the mounting cavity, the projection assembly is mounted on the adjustment bracket and is able to extend out of the through hole or retract into the mounting cavity under the action of the adjustment bracket.

In these technical solutions, the mounting cavity is disposed in the handle, the handle is provided with a through hole, the adjustment bracket is mounted in the mounting cavity, and the projection assembly is mounted on the adjustment bracket. Thus, the projection assembly is able to extend out of the through hole or retract into the mounting cavity by the adjustment bracket, to achieve height position adjustment of the projection assembly, so that the projection size of the projection assembly is able to be appropriately adjusted.

In any one of the above technical solutions, preferably, the heating appliance is a liquid heating container such as an electric kettle, or the heating appliance is a cooking appliance such as a rice cooker.

Additional aspects and advantages of the present invention will become apparent in the following description, or be understood by the practices of the present invention.

### BRIEF DESCRIPTION OF THE DRAWINGS

The above and/or additional aspects and advantages of the present invention will become apparent and easily understood from the following description of the embodiments in conjunction with the drawings, wherein:
- Fig. 1 is a structural schematic view of a heating appliance provided by an embodiment of the present invention;
- Fig. 2 is another structural schematic view of a heating appliance provided by an embodiment of the present invention;
- Fig. 3 is still another structural schematic view of a heating appliance provided by an embodiment of the present invention;
- Fig. 4 is a structural schematic view of a heating appliance provided by a second embodiment of the present invention;
- Fig. 5 is a structural schematic view of a projection assembly of a heating appliance provided by a plurality of embodiments of the present invention;
- Fig. 6 is a schematic diagram of a power supply structure of a heating appliance provided by a plurality of embodiments of the present invention;
- Fig. 7 is a structural schematic view of a specific embodiment of a projection assembly of a heating appliance provided by an embodiment of the present invention;
- Fig. 8 is a schematic view showing the projection generated by the projection assembly in Fig. 7 ;
- Fig. 9 is a structural schematic view of another specific embodiment of a projection assembly of a heating appliance provided by an embodiment of the present invention;
- Fig. 10 is a structural schematic view of a third specific embodiment of a projection assembly of a heating appliance provided by an embodiment of the present invention;
- Fig. 11 is a structural schematic view of a fourth specific embodiment of a projection assembly of a heating appliance provided by an embodiment of the present invention;
- Fig. 12 is a structural schematic view of a heating appliance provided by another embodiment of the present invention;
- Fig. 13 is a structural schematic view showing another state of the heating appliance in Fig. 12 .

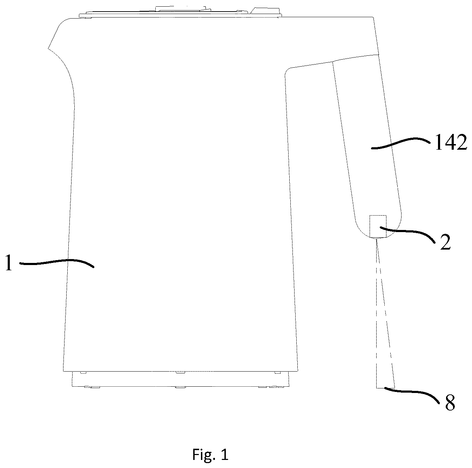

Wherein, the correspondence between the reference numerals and the component names in Figs. 1-13 is: 1: appliance body, 12: container body, 14: handle, 142: mounting cavity, 144: through hole, 16: power supply apparatus, 2: projection assembly, 22: lens, 24: display apparatus, 242: light transmitting member, 2422: first transmission gear, 244: light emitting source, 3: protrusion, 4: first rotary disk, 42: second transmission gear, 52: second rotary disk, 54: connecting shaft, 6: adjustment assembly, 62: diode, 64: resistor, 7: adjustment bracket, 8: projection.

### DETAILED DESCRIPTION OF EMBODIMENTS

In order to understand the above objects, features and advantages of the present invention more clearly, a further detailed description of the present invention will be given below combination with the drawings and specific embodiments. It should be noted that the embodiments in the present application and the features in the embodiments may be combined with each other without conflict.

In the following description, many specific details are set forth in order to fully understand the present invention, but the present invention may be implemented by other manners different from those described herein. Therefore, the scope of protection of the present invention is not limited by the specific embodiments disclosed below.

A heating appliance provided by an embodiment of the present invention will be described below with reference to Figs. 1-13 .

As shown in Figs. 1-13 , an embodiment of the first aspect of the present invention provides a heating appliance, comprising the appliance body 1 and the projection assembly 2, as shown in Figs. 1 , 4 , 12 , and 13 , the projection assembly 2 is mounted on the appliance body 1 and is able to project a projection toward the outside of the appliance body 1.

The heating appliance provided according to an embodiment of the present invention comprises the appliance body 1 and the projection assembly 2, and the projection assembly 2 is mounted on the appliance body 1. Herein, the projection assembly 2 is able to be mounted either inside the appliance body 1 or outside the appliance body 1. The projection assembly 2 is specifically for generating the projection 8, and the projection assembly 2 is able to project a projection toward the outside of the appliance body 1. That is, the projection assembly 2 is able to perform projection directly outside the appliance body 1, so that the projection generated by the projection assembly 2 is located outside the appliance body 1. That is, the projection assembly 2 is able to generate the projection 8 directly outside the appliance body 1, so that the user is able to directly view the projection 8 generated by the projection assembly 2 outside the appliance body 1. With this structure, since there is no block from the outer casing of the product when the user views the projection 8, the projection 8 viewed by the user is clearer. In addition, with this structure, since the projection is outside, the position of the projection is able to be selected according to actual needs to determine the size of the projection 8, so that the product is able to adjust the size of the projection 8 according to the actual needs of the user, and the size of the projection 8 is not limited by the volume of the outer casing and the like of the appliance body 1, which improves the usage experience of the user.

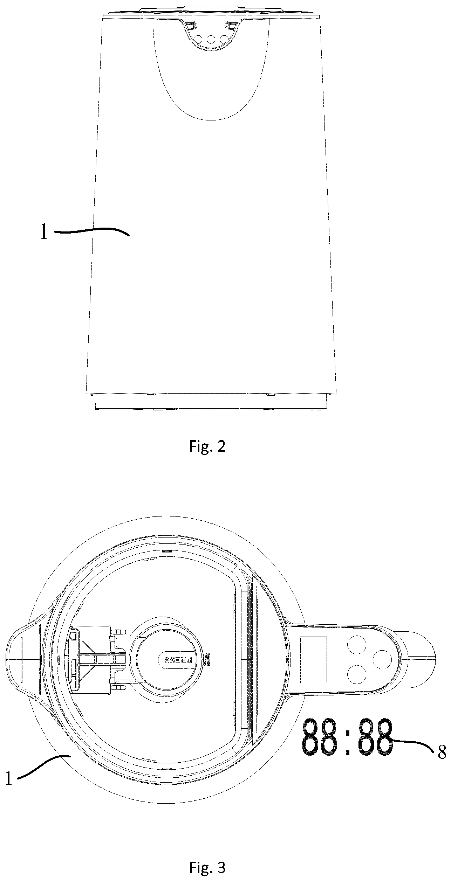

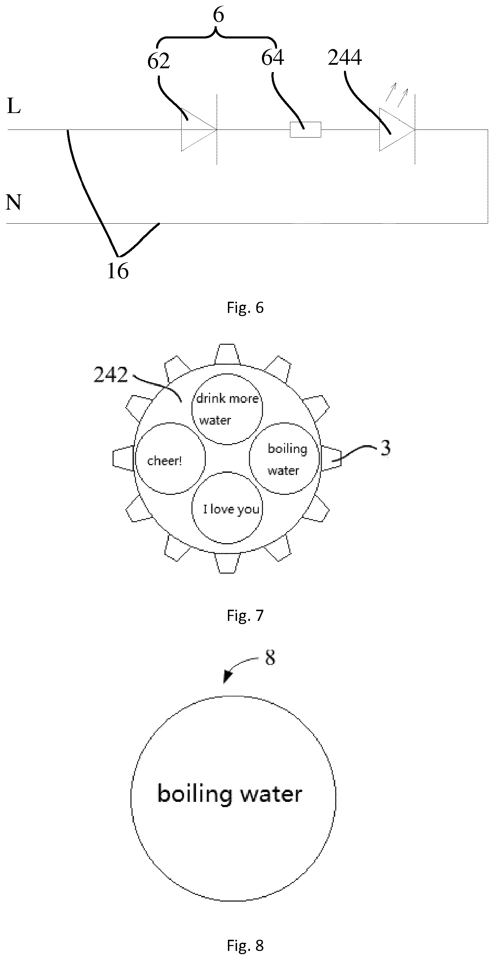

Wherein, the dotted lines in Figs. 1, 4, 5, 12, and 13 indicate light rays. For convenience of description, the projection is simplified into a straight line in Figs. 1 , 4 , 5 , 12 , and 13 . However, in actual process, the shape of the projection is not necessarily a straight line, and the projection may be specifically information such as the character in Fig. 8 and the character in Fig. 3 , and of course, may also be information such as a pattern.

Wherein, 88: 88 in Fig. 3 is the projection content in a specific embodiment.

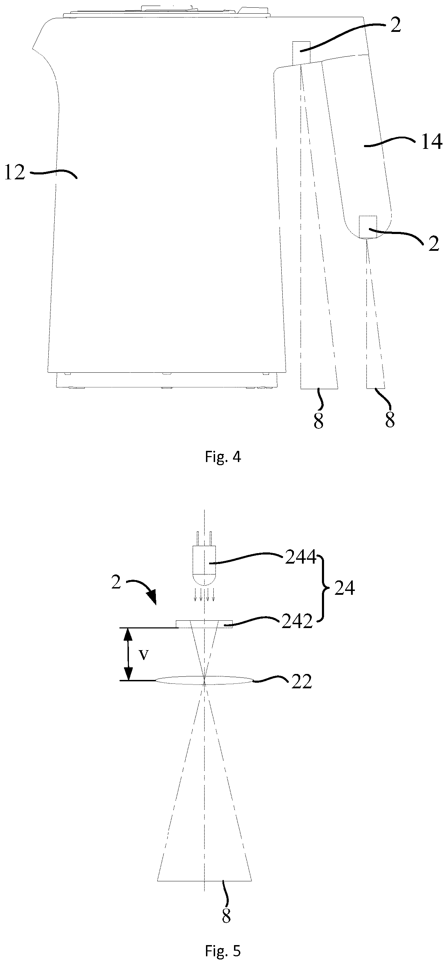

In the above embodiment, as shown in Fig. 5 , the projection assembly 2 comprises: the lens 22; the display apparatus 24 capable of emitting projection light rays, and the display apparatus 24 is able to irradiate the projection light rays onto the lens 22 and form the projection 8 outside the appliance body 1 by the lens 22.

In this embodiment, the projection assembly 2 specifically comprises the lens 22 and the display apparatus 24, and the lens 22 is used to adjust the light rays so that the size, the position, and the like of the projection 8 is able to be adjusted. The display apparatus 24 is provided with information to be projected such as characters or patterns to be projected, and the display apparatus 24 is able to display contents to be projected thereon such as characters or patterns to be projected. The specific display principle may be a transmission display principle or a refraction display principle. Specifically, the contents that need to be displayed may be illuminated first, or other portions other than contents to be projected such as characters or patterns to be projected may be illuminated, so that the contents to be projected such as characters or patterns that need to be projected are able to be converted into projection light rays related to information to be projected to be highlighted. After the characters or patterns that need to be projected are highlighted by the projection light rays, the projection light rays are able to be irradiated onto the lens 22 first, so that the projection 8 is able to be formed when the light image passing through the lens 22 is irradiated onto other objects, such as a screen or a cooktop. So far the projection display of characters or patterns to be projected is able to be achieved.

In the above embodiment, as shown in Fig. 5 , the display apparatus 24 comprises the light transmitting member 242 and the light emitting source 244; the light transmitting member 242 is provided with information to be projected, and the light emitting source 244, the light transmitting member 242, and the lens 22 are sequentially spaced a part along the same direction. The light rays emitted by the light emitting source 244 are able to be irradiated onto the light transmitting member 242, and is able to be irradiated onto the lens 22 through the light transmitting member 242.

In these embodiments, the display apparatus 24 comprises the light transmitting member 242 and the light emitting source 244, wherein the light transmitting member 242 is provided with information to be projected, that is, characters or patterns that need to be projected, etc., and the light emitting source 244 is used for emitting light, so as to illuminate the characters or patterns on the light transmitting member 242. The light that is irradiated onto the information to be projected is able to be irradiated onto the lens 22 through the light transmitting member 242, and then the projection 8 is able to be formed outside the product. With this structure, the light transmitting member 242 and the light emitting source 244 are two parts, which are able to make the structure of the light transmitting member 242 more diverse. Of course, the light transmitting member 242 and the light emitting source 244 can also be one part, such as an integrated structure. When specifically disposing, the light emitting source 244, the light transmitting member 242, and the lens 22 may be sequentially spaced apart along the same direction. For example, the light emitting source 244, the light transmitting member 242, and the lens 22 may be sequentially spaced apart from the top down. That is, herein, the light emitting source 244, the light transmitting member 242, and the lens 22 are preferably disposed on the same line. Of course, when a part such as a reflector is used, the light emitting source 244, the light transmitting member 242, and the lens 22 may not be disposed on the same straight line.

Of course, in other solutions, projection can also be performed without the transmission principle, and can also be performed by the refraction principle of light.

In any one of the above embodiments, preferably, the light transmitting member 242 is made of light transmitting material, the light transmitting member 242 is provided with opaque patterns or characters, or the light transmitting member 242 is made of non-light transmitting material, the light transmitting member 242 is provided with a light transmission hole, and the light transmission hole is able to form at least one character and/or at least one pattern.

In these embodiments, on the one hand, the light transmitting member 242 may be a transparent structure made of light transmitting material (such as transparent material). At this time, some opaque patterns and characters may be disposed on the light transmitting member 242 to be the projection information to be projected. Thus, when the light emitted from the light emitting source 244 is irradiated onto the light transmitting member 242, the place where the characters and the patterns are disposed cannot transmit light, but for the place where the characters and the patterns are not disposed, the light is able to be irradiated onto the lens 22 through the light transmitting member 242. Thus, the characters and patterns after projection are able to be displayed in a shade manner. The opaque patterns and characters may preferably be made of a coating such asink. Of course, the light transmitting member 242 can also be made of non-light transmitting material. At this time, the information to be projected such as characters or patterns is able to be disposed on the light transmitting member 242 in the form of a hole. For example, if a triangle needs to be projected, a triangular hole is able to be disposed on the light transmitting member 242. If a character needs to be projected, the corresponding character hole is able to be engraved on the light transmitting member 242. Thus, when the light emitted by the light emitting source 244 is irradiated onto the light transmitting member 242, the light is able to pass through the holes corresponding to the character and the pattern. For the place where there is no character or pattern, the light of the light emitting source 244 is blocked. Thus, when the light source passing through the hole is irradiated onto the projection surface such as a cooktop, the corresponding content is able to be projected, so that the characters and patterns which needs to be projected is able to be displayed in a highlighted manner.

In another embodiment (not shown), preferably, the light transmitting member 242 is a display screen, and information to be projected is able to be displayed on the display screen, and the heating appliance further comprises: an information supply member which is connected to the display screen, is able to transfer one or more kinds of information to be projected to the display screen and is able to change the information to be projected on the display screen.

In these embodiments, the light transmitting member 242 is also able to be disposed as a display screen, and the character and the pattern which need to be projected is able to be directly disposed on the display screen. Preferably, the information supply member is able to be disposed corresponding to the display screen, so that the display content on the display screen is able to be controlled to change by the information supply member, so as to achieve projection of different contents. Thus, various parameter contents such as real-time temperature and heating power of the product are able to be displayed in real time by the projection assembly 2, so that the user is able to know these parameter information of the product in real time. Herein, the information supply member may be specifically a part such as a circuit board or a sensor capable of communicating with the display screen.

In any one of the above embodiments, preferably, the information supply member comprises a collecting apparatus (not shown) and an electronic control board (not shown); wherein the collecting apparatus comprises one or more of a temperature detecting member, a TDS detecting apparatus, a movement sensor, a liquid level detecting member, and a pressure sensor.

In these embodiments, the information supply member may be specifically a collecting apparatus and an electronic control board, and the collecting apparatus may be specifically one or more of a temperature detecting member, a TDS detecting apparatus, a movement sensor, a liquid level detecting member and a pressure sensor. Specifically, the display screen is able to be connected to the electronic control board or the collecting apparatus such as the temperature detecting member, the TDS detecting apparatus, and the like. Thus, the contents on the electronic control board, the temperature detecting member, the TDS detecting apparatus, and the like are able to be projected through the display screen, so that the parameters such as a temperature, a pressure, a TDS, a liquid level and a pressure of the product are able to be displayed in a projection manner for the user to view.

In any one of the above embodiments, as shown in Figs. 7-11 , the light transmitting member 242 is provided with a plurality of areas, each of which is provided with information to be projected, and the light from the light emitting source 244 is able to be irradiated onto at least one area on the light transmitting member 242; wherein the light transmitting member 242 is able to move relative to the light emitting source 244, and the irradiation area of the light emitting source 244 on the light transmitting member 242 is able to be adjusted by the movement of the light transmitting member 242.

In these embodiments, the light transmitting member 242 is able to be divided into a plurality of areas, each of which is provided with the content that is able to be displayed in a projection manner. At the same time, the light transmitting member 242 is able to be rotatably and/or slidably mounted on the appliance body 1. Thus, by the rotation of the light transmitting member 242, different information to be projected is able to be placed in the irradiation area of the light emitting source 244, so that the content of the projection display is able to be changed to achieve the projection display of various contents.

Wherein, the characters such as "drink more water", "boiling water", "cheer" and the like in Figs. 7-11 are the contents that are able to be projected in a specific embodiment. Herein, the characters such as "drink more water", "boiling water", "cheer" and the like are only for exemplifying, rather than the specific limitation to the content to be projected, and the substance of the content to be projected is able to be arbitrarily set according to actual needs.

In any one of the above embodiments, preferably, as shown in Figs. 7-11 , a plurality of areas on the light transmitting member 242 are disposed along the circumferential direction of the light transmitting member 242, and the light transmitting member 242 is rotatably mounted on the appliance body 1; or a plurality of areas on the light transmitting member 242 are disposed along the lateral direction of the light transmitting member 242, and the light transmitting member 242 is slidably mounted on the appliance body 1 along the lateral direction (not shown in the embodiment).

In these embodiments, on the one hand, a plurality of areas may be disposed along the circumferential direction of the light transmitting member 242, and the light transmitting member 242 is rotatably mounted on the appliance body 1. Thus, the projection contents of the different areas are able to be placed under the irradiation area of the light emitting source 244 by the rotation of the light transmitting member 242, so that the irradiation area of the light emitting source 244 on the light transmitting member 242 is able to be adjusted. On the other hand, a plurality of areas may be disposed along the lateral direction of the light transmitting member 242 (for example, disposed in the horizontal direction), and the light transmitting member 242 is slidably mounted on the appliance body 1 along the lateral direction. Thus, the projection contents of the different areas are able to be placed under the irradiation area of the light emitting source 244 by the lateral sliding of the light transmitting member 242, so that the irradiation area of the light emitting source 244 on the light transmitting member 242 is able to be adjusted.

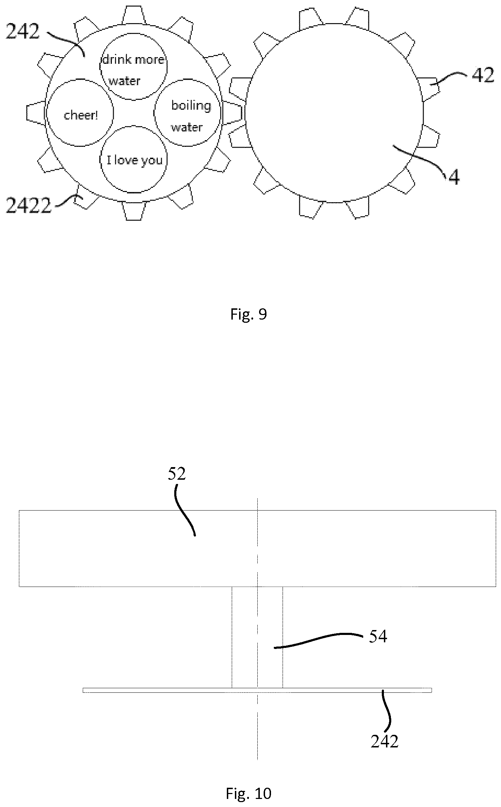

In any one of the above embodiments, preferably, as shown in Figs. 7-11 , the heating appliance further comprises a driving member. Specifically, the driving member is mounted on the appliance body 1 and is able to be connected to the light transmitting member 242 and drive the light transmitting member 242 to move; wherein the driving member comprises a manual member and/or an electrical member, and the manual member may be specifically the protrusion 3 in Fig. 7 or the first rotary disk 4 in Fig. 9 , or a combined structure of the second rotary disk 52 and the connecting shaft 54 in Fig. 10 .

In these embodiments, the heating appliance further comprises a driving member which is mounted on the appliance body 1 and connected to the light transmitting member 242, and is able to drive the light transmitting member 242 to move so that different areas of the light transmitting member 242 is able to be placed under the irradiation area of the light emitting source 244. The drive member here can be either an automatic member that is able to be moved by electrical or other manners, or a manual member that needs to be manually pushed. When the driving member comprises the manual member, it is preferable to expose a portion of the manual member outside the appliance body 1, so that the user is able to push the manual member to achieve the driving movement of the light transmitting member 242. Specifically, for example, the manual member is able to be completely disposed inside the appliance body 1, and then an operation window is provided on the appliance body 1 so that at least a portion of the manual member is able to be exposed through the operation window. Of course, the manual member can also directly extend out of the operating window so that the portion of the manual member is able to be directly located outside the appliance body 1. When the driving member comprises the automatic member, the driving member is able to be completely hidden and mounted in the appliance body 1, and the automatic member does not need to be manually operated, thereby simplifying the workload of the user and improving the usage experience of the user.

In the above first specific solution, preferably, as shown in Fig. 7 , the light transmitting member 242 is rotatably mounted on the appliance body 1.The driving member comprises a manual member, and the manual member comprises a plurality of protrusions 3 which are spaced apart in the circumferential direction of the light transmitting member 242.The plurality of protrusions 3 are able to drive the light transmitting member 242 to rotate.

In this embodiment, the driving member comprises a manual member, and the manual member comprises a plurality of protrusions 3 which are spaced apart in the circumferential direction of the light transmitting member 242. That is, herein a circle of protrusions 3 is able to be directly disposed around the light transmitting member 242, and the portion of the protrusion 3 is exposed outside the appliance body 1, so that the rotation of the light transmission member 242 is able to be achieved by stirring the protrusion 3.

Wherein, specifically, for example, when the area in which the boiling water is disposed is placed under the irradiation of the light emitting source, the projection content as shown in Fig. 8 is able to be projected outside the appliance body.

In the above second specific solution, preferably, as shown in Fig. 9 , the light transmitting member 242 is rotatably mounted on the appliance body 1, and a plurality of first transmission gears 2422 are disposed in the circumferential direction of the light transmitting member 242. The driving member comprises a manual member, the manual member comprises the first rotary disk 4, and the first rotary disk 4 is rotatably mounted on the appliance body 1. At least a portion of the first rotary disk 4 is exposed outside the appliance body 1, the first rotary disk 4 is provided with the second transmission gear 42 that cooperates with the first transmission gear 2422, and the rotation of the first rotation disk 4 is able to drive the light transmission member 242 to rotate.

In this embodiment, a circle of the first transmission gears 2422 are disposed around the light transmitting member 242, the driving member is preferably a manual member, and the manual member may specifically comprise the first rotary disk 4.The first rotary disk 4 is provided with the second transmission gear 42 that cooperates with the first transmission gear 2422, so that the rotation of the first rotation disk 4 is able to drive the light transmission member 242 to rotate. Preferably, at least a portion of the first rotary disk 4 is able to be exposed outside the appliance body 1 so that the user is able to drive the light transmitting member 242 by operating the first rotary disk 4.

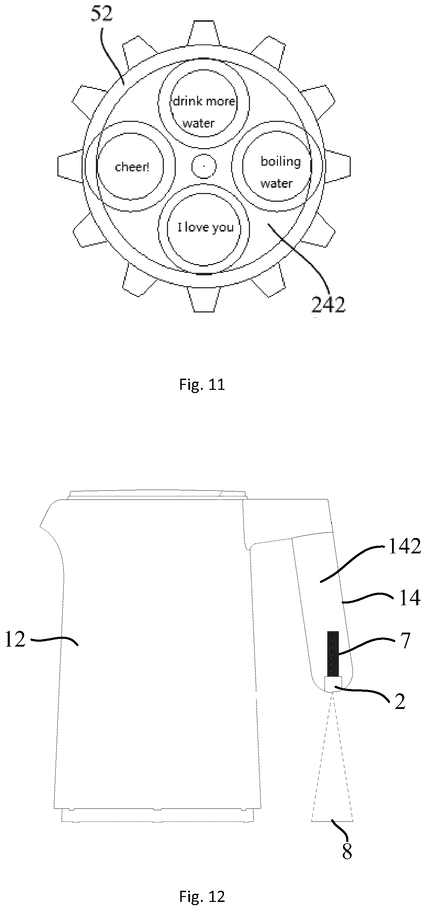

In the above third specific solution, preferably, as shown in Figs. 10 and 11 , the light transmitting member 242 is rotatably mounted on the appliance body 1.The driving member comprises a manual member, and the manual member comprises a second rotary disk 52 and the connecting shaft 54. The second rotary disk 52 is rotatably mounted on the appliance body 1. At least a portion of the second rotary disk 52 is exposed outside the appliance body 1. The connecting shaft 54 is connected between the second rotary disk 52 and the light transmitting member 242.

In these embodiments, the second rotary disk 52 may also be disposed corresponding to the light transmitting member 242, and then the connection between the second rotary disk 52 and the light transmitting member 242 is achieved by the connecting shaft 54, such that the rotational driving of the light transmitting member 242 is able to be achieved by rotating the second rotary disk 52.

Wherein, in the above three solutions, the protrusion 3, the first rotary disk 4, and the second rotary disk 52 are at least partially exposed outside, which means that the protrusion 3, the first rotary disk 4, and the second rotary disk 52 are not completely sheltered by the appliance body 1, other than that the protrusion 3, the first rotary disk 4, and the second rotary disk 52 must partially extend out of the appliance body 1. Herein, the protrusion 3, the first rotary disk 4, and the second rotary disk 52 are able to be exposed through the hole of the appliance body 1. At this time, when the user operates, the hand or the tool is able to be inserted into the appliance body 1 from the hole, and then the stirring of the protrusion 3, the first rotary disk 4, and the second rotary disk 52 is able to be achieved.

In any one of the above embodiments, preferably, as shown in Fig. 5 , the distance between the light transmitting member 242 and the lens 22 is v, and the focal length of the lens 22 is f, wherein 2f>v>f.

In these embodiments, the distance v between the light transmitting member 242 and the lens 22 is set between the focal length f of the lens 22 and twice thereof, and the projection 8 is able to be enlarged by the lens 22, thereby making the projection 8 clearer.

In any one of the above embodiments, preferably, the light emitting source 244 is capable of emitting light of a plurality of colors or the light emitting source 244 comprises a plurality of light sources of different colors.

In these embodiments, the light emitting source 244 is able to emit light of a plurality of colors, so that light of different colors are able to be projected. At the same time, the light emitting source 244 is able to be disposed to comprise light sources of a plurality of colors, so that light sources of a plurality of colors are able to be utilized to emit light of a plurality of colors, so as to achieve colors of different color contents or to adjust the color of the projection.

In any one of the above embodiments, preferably, as shown in Fig. 5 , the light emitting source 244, the light transmitting member 242, and the lens 22 are mounted on the same straight line.

In these embodiments, the light emitting source 244, the light transmitting member 242 and the lens 22 are preferably mounted on the same straight line, which is able to reduce the divergence of light and ensure the definition of the projection 8.

In any one of the above embodiments, preferably, the light emitting source 244 is a LED lamp.

In these embodiments, the light emitting source 244 preferably employs a LED lamp because the LED lamp is relatively energy saving and durable, thereby reducing the cost of the light emitting source 244 and increasing the useful life thereof.

In anyone of the above embodiments, preferably, the lens 22 is a convex lens or a plane mirror.

In these embodiments, the lens 22 is preferably a convex lens, so that the enlargement of the projection 8 is able to be achieved by the convex lens. Of course, the lens 22 can also be a plane mirror.

In any one of the above embodiments, preferably, the heating appliance further comprises: a projection screen (not shown) which is mounted on the appliance body 1 and for carrying the projection 8 generated by the projection assembly 2.

In these embodiments, a projection screen may be disposed outside the appliance body 1 for specifically carrying the projected content. Such disposition is able to fix the location of the projection without projecting onto a desktop and the like, thereby reducing the influence of color chromatic aberration of the desktop and the like on projection display.

In any one of the above embodiments, preferably, as shown in Figs. 1 , 4 and 12 and 13 , the appliance body 1 comprises: the container body 12; the handle 14 disposed on the container body 12, the projection assembly 2 is mounted on the handle 14.

In these embodiments, the appliance body 1 comprises the container body 12 and the handle 14. The projection assembly 2 is preferably mounted on the handle 14, since the structure at the handle 14 is relatively simple and for a product such as a kettle, the temperature at the handle 14 is relatively low. Therefore, the projection assembly 2 is disposed at the handle 14, so that the structure of the product is reasonable, and the projection assembly 2 is able to be prevented from being overheated to some extent.

In any one of the above embodiments, preferably, the mounting cavity 142 is disposed in the handle 14, and the projection assembly 2 is mounted in the mounting cavity 142; wherein the handle 14 is provided with the through hole 144 communicating with the mounting cavity 142, and the lens 22 is mounted at the through hole 144 in a seal manner. Of course, in another embodiment, a light transmitting cover may also be mounted at the through hole 144. In still another embodiment, at least a portion of casing of the handle 14 is made of light transmitting material.

In these embodiments, the mounting cavity 142 is able to be disposed in the handle 14 and then the projection assembly 2 is able to be mounted in the mounting cavity 142, such that the hidden mounting of the projection assembly 2 is able to be achieved by the handle 14. Specifically, in a specific embodiment, a through hole 144 may be disposed on the handle 14 to achieve the emission of light. At this time, on the one hand, the lens 22 may be mounted at the through hole 144 to achieve the block of the through hole 144, on the other hand, a light transmitting cover may be additionally disposed at the through hole 144. Of course, the through hole 144 may not be disposed on the handle 14, and the handle 14 may be directly disposed to be a light transmitting structure, or the portion corresponding to the lens 22 of handle 14 may be directly disposed to be a light transmitting structure.

In any one of the above embodiments, preferably, the appliance body 1 further comprises: a heating assembly (not shown) mounted on the container body 12; and the power supply apparatus 16 which is connected to the heating assembly and capable of supplying power to the heating assembly and the projection assembly 2.

In these embodiments, the appliance body 1 further comprises a heating assembly and the power supply apparatus 16, wherein the heating assembly is specifically for heating, and the power supply apparatus 16 is primarily for supplying power. The power supply apparatus 16 here may be a battery and the like, or may be a power plug that is able to be plugged into a socket at home.

In any one of the above embodiments, preferably, as shown in Fig. 6 , the heating appliance further comprises the adjustment assembly 6 connected between the projection assembly 2 and the power supply apparatus 16 for adjusting current and voltage delivered to the projection assembly 2 from the power supply apparatus 16.

In these embodiments, the adjustment assembly 6 can be disposed between the power supply apparatus 16 and the projection assembly 2, for example between the power supply apparatus 16 and the light emitting source 244, such that the adjustment assembly 6 is able to specifically adjust voltage and current delivered to the light emitting source 244 and the like from the power supply apparatus 16. In this way, the voltage and current on the light emitting source 244 and the like are able to be ensured to meet the rated requirements, and the phenomenon that the light emitting source 244 is burned out due to the excessive voltage and current does not occur.

In any one of the above embodiments, preferably, as shown in Fig. 6 , the adjustment assembly 6 comprises the diode 62 and the resistor 64, and both the diode 62 and the resistor 64 are connected in series between the projection assembly 2 and the power supply apparatus 16; or the adjustment assembly 6 comprises an electronic control board that is connected between the power supply apparatus 16 and the projection assembly 2.

In these embodiments, the adjustment assembly 6 comprises the diode 62 and the resistor 64. The rectification is able to be performed by connecting in series the diode on the loop of the light emitting source 244, while the voltage is able to be reduced by connecting in series the resistor 64. Thus, after rectification and voltage reduction of the diode 62 and the resistor 64, voltages and currents required for the light emitting source 244 and the like are able to be obtained. In another solution, when the product itself is provided with an electronic control board and the like, the power supply apparatus 16 is able to be first connected to the electronic control board, and then the electronic control board supplies power to the light emitting source 244 and the like. In this way, the control of the voltage and current are able to be achieved directly by the electronic control board, so that voltages and currents required for the light emitting source 244 and the like are able to be obtained.

In another embodiment described above, preferably, the power supply apparatus 16 is a power plug (not shown) that is able to be connected to an external power supply, or the power supply apparatus 16 is a battery.

In these embodiments, a power plug is able to be disposed on the appliance body 1, so that the product is able to be supplied with power by a connection of the power plug with mains supply such as a socket at home. Of course, in another solution, a battery may be disposed on the appliance body 1, and then the light emitting source 244 and the like of the projection assembly 2 may be supplied with power by the battery.

In any one of the above embodiments, preferably, the appliance body 1 comprises a power switch (not shown), the power switch is connected to the projection assembly 2, when the power switch is turned on, the projection assembly 2 is powered on to work, and when the power switch is turned off, the projection assembly 2 is powered off and does not work.

In these embodiments, a power switch is able to be disposed on the appliance body 1 to achieve power-on control of the product, and at this time, the projection assembly 2 is able to be directly connected to the power switch so that the synchronous opening or the synchronous closing of the projection assembly 2 is able to be achieved directly by the power switch. Thus, the projection assembly 2 is able to be powered on to work when the power switch is turned on, and the projection assembly 2 is also powered off synchronously when the power switch is turned off.

In another embodiment described above, preferably, the heating appliance further comprises a projection switch (not shown) which is connected to the projection assembly 2 and is able to control the opening and closing of the projection assembly 2.

In these embodiments, a projection switch is dedicatedly provided for the projection assembly 2, so that the individual control of the projection assembly 2 is able to be achieved by the projection switch without bundling control with the power-on condition of the product. Thus, projection display can be performed when the product is completely powered off, or can be stopped during product operation, so that the opening and closing of the projection assembly 2 is able to be more flexible and optional, without being affected by the power-on condition of the product itself.

In any one of the above embodiments, preferably, as shown in Fig. 1 , the number of projection assemblies 2 is one, or as shown in Fig. 4 , the number of projection assemblies 2 is multiple.

In these embodiments, the number of projection assemblies 2 can be set according to actual needs, for example, it can be set as one, two or more. By disposing a plurality of projection assemblies 2, multiple projection displays are able to be achieved, thereby making the projection display of the product more complete and rich.

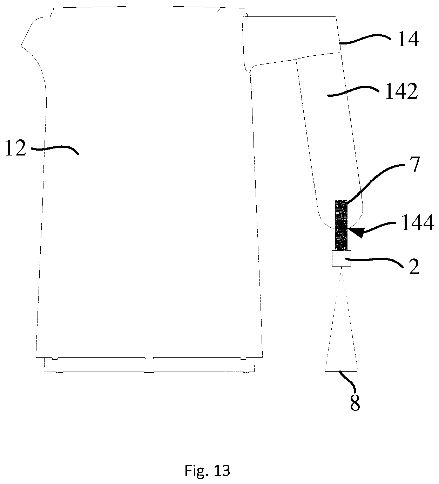

In any one of the above embodiments, as shown in Figs. 12 and 13 , the projection assembly 2 is movably mounted on the appliance body 1, and the projection size of the projection assembly 2 and/or the projection angle of the projection assembly 2 are able to be adjusted by the movement of the projection assembly 2.

In these embodiments, the projection assembly 2 is able to be movably mounted on the appliance body 1 such that the projection angle and projection size of the projection assembly 2 is able to be changed by the overall activity of the projection assembly 2 to better satisfy the client needs. Specifically, the projection assembly 2 is able to be either mounted on the appliance body 1 in a vertically movable manner, or mounted on the appliance body 1 in a laterally movable manner.

In any one of the above embodiments, preferably, as shown in Fig. 12 and Fig. 13 , the heating appliance further comprises: the adjustment bracket 7 mounted on the appliance body 1, and the projection assembly 2 is mounted on the appliance body 1 by the adjustment bracket 7; wherein the projection assembly 2 is able to be driven to move by the adjustment bracket 7.

In these embodiments, the adjustment bracket 7 may be disposed on the appliance body 1, and then the disposition of the projection assembly 2 is specifically adjusted by the adjustment bracket 7. The adjustment bracket 7 is preferably disposed in the up and down direction to adjust the height of the projection assembly 2 upward and downward. Of course, the adjustment bracket 7 can also be disposed in the horizontal direction to achieve positional adjustment of the projection assembly 2 in the horizontal direction.

Of course, in another solution, the adjustment bracket 7 may not be disposed, and the projection assembly 2 is directly movably mounted on the appliance body 1.

In any one of the above embodiments, preferably, as shown in Figs. 12 and 13 , the adjustment bracket 7 is movable in the longitudinal direction of the heating appliance to adjust the height of the projection assembly 2 in the longitudinal direction of the appliance body 1; and/or the adjustment bracket 7 is movable in the lateral direction of the heating appliance to adjust the position of the projection assembly 2 in the lateral direction of the appliance body 1(not shown in this embodiment); and/or the adjustment bracket 7 is rotatably mounted on the appliance body 1.

In these embodiments, the adjustment bracket 7 may preferably be disposed as a movable structure movable in the height direction, so that the height adjustment of the projection assembly 2 in the longitudinal direction of the appliance body 1 is able to be achieved by the movement of the adjustment bracket 7, so as to be able to change the projection distance and achieve the size adjustment of the projection. Of course, when it is necessary to laterally adjust the position of the projection assembly 2, the adjustment bracket 7 can also be disposed as a structure movable in the lateral direction, to achieve positional adjustment of the projection assembly 2 in the lateral direction of the appliance body 1. Furthermore, the adjustment bracket 7 can also be rotatably mounted on the appliance body 1, so that the projection angle of the projection assembly 2 is able to be adjusted.

In any one of the above embodiments, preferably, the movement stroke of the adjustment bracket 7 in the longitudinal direction of the heating appliance is greater than 0 mm and less than or equal to 30 mm; the adjustment bracket 7 is vertically movable in the longitudinal direction of the heating appliance.

In these embodiments, the stroke at which the adjustment bracket 7 is able to move in the longitudinal direction should be neither too large, nor too small, and preferably in a range of greater than 0 mm and less than or equal to 30 mm, so that the height at which the projection assembly 2 is able to be adjusted is relatively moderate. The adjustment bracket 7 is preferably vertically movable in the longitudinal direction of the heating appliance, so that the vertical lift of the projection assembly 2 in height is able to be achieved. Therefore, it is unnecessary to change the lateral position of the projection assembly 2, so that the projection assembly 2 is able to still achieve the projection in the original position after adjustment. That is, this disposition will only change the size of the projection 8, and will not change the position of the projection 8.

In any one of the above embodiments, preferably, the angle by which the adjustment bracket 7 is able to be rotated is greater than 0° and less than or equal to 360°.

In these embodiments, the angle by which the adjustment bracket 7 is able to be rotated can be set between 0° and 360° according to actual needs, so that the adjustment bracket 7 is able to be rotated and adjusted by a larger angle. Therefore, the projection assembly 2 is able to be rotated to different directions to perform projection, so that the selection of the projection position is more flexible and convenient.

In any one of the above embodiments, preferably, as shown in Figs. 12 and 13 , the appliance body 1 comprises the handle 14 in which the mounting cavity 142 is disposed, and the handle 14 is provided with the through hole 144 communicating with the mounting cavity 142. The adjustment bracket 7 is mounted in the mounting cavity 142, and the projection assembly 2 is mounted on the adjustment bracket 7 and is able to extend out of the through hole 144 or retract into the mounting cavity 142 under the action of the adjustment bracket 7.

In these embodiments, the mounting cavity 142 is disposed in the handle 14, the handle 14 is provided with a through hole 144, the adjustment bracket 7 is mounted in the mounting cavity 142, and the projection assembly 2 is mounted on the adjustment bracket 7. Thus, the projection assembly 2 is able to extend out of the through hole 144 or retract into the mounting cavity 142 by the adjustment bracket 7, to achieve height position adjustment of the projection assembly 2, so that the projection size of the projection assembly 2 is able to be appropriately adjusted.

In any one of the above embodiments, preferably, the heating appliance is a liquid heating container such as an electric kettle, or the heating appliance is a cooking appliance such as a rice cooker.

In the description of the present specification, the terms "first" and "second" are merely for descriptive purposes but cannot be understood as indicating or implying relative importance, unless otherwise explicitly specified and limited; the terms "connection", "mounting", "fixing", and the like should be understood broadly. For example, "connection" may be a fixed connection, a detachable connection, or an integrated connection; "connection" may be a direct connection or an indirect connection through an intermediate medium. The specific meanings of the above terms in the present invention can be understood by those skilled in the art according to specific cases.

In the description of the present specification, the description of the terms "one embodiment", "some embodiments", "specific embodiments" and the like means that the specific features, structures, material, or characteristics described in combination with the embodiments or examples are contained in at least one embodiment or example of the present invention. In the present specification, the schematic representation of the above terms does not necessarily refer to the same embodiment or example. Furthermore, the specific features, structures, material or characteristics described may be combined in a suitable manner in any one or more embodiments or examples.

The above are only the preferable embodiments of the present invention, and are not intended to limit the present invention, and for those skilled in the art, various modifications and changes can be made to the present invention.

In any one of the above embodiments, preferably, as shown in Fig. 5, the light emitting source 244, the light transmitting member 242, and the lens 22 are mounted on the same straight line.

In these embodiments, the light emitting source 244, the light transmitting member 242 and the lens 22 are preferably mounted on the same straight line, which is able to reduce the divergence of light and ensure the definition of the projection 8.

In any one of the above embodiments, preferably, the light emitting source 244 is a LED lamp.

In these embodiments, the light emitting source 244 preferably employs a LED lamp because the LED lamp is relatively energy saving and durable, thereby reducing the cost of the light emitting source 244 and increasing the useful life thereof.

In anyone of the above embodiments, preferably, the lens 22 is a convex lens or a plane mirror.

In these embodiments, the lens 22 is preferably a convex lens, so that the enlargement of the projection 8 is able to be achieved by the convex lens. Of course, the lens 22 can also be a plane mirror.

In any one of the above embodiments, preferably, the heating appliance further comprises: a projection screen (not shown) which is mounted on the appliance body 1 and for carrying the projection 8 generated by the projection assembly 2.

In these embodiments, a projection screen may be disposed outside the appliance body 1 for specifically carrying the projected content. Such disposition is able to fix the location of the projection without projecting onto a desktop and the like, thereby reducing the influence of color chromatic aberration of the desktop and the like on projection display.

In any one of the above embodiments, preferably, as shown in Figs. 1, 4 and 12 and 13, the appliance body 1 comprises: the container body 12; the handle 14 disposed on the container body 12, the projection assembly 2 is mounted on the handle 14.

In these embodiments, the appliance body 1 comprises the container body 12 and the handle 14. The projection assembly 2 is preferably mounted on the handle 14, since the structure at the handle 14 is relatively simple and for a product such as a kettle, the temperature at the handle 14 is relatively low. Therefore, the projection assembly 2 is disposed at the handle 14, so that the structure of the product is reasonable, and the projection assembly 2 is able to be prevented from being overheated to some extent.

In any one of the above embodiments, preferably, the mounting cavity 142 is disposed in the handle 14, and the projection assembly 2 is mounted in the mounting cavity 142; wherein the handle 14 is provided with the through hole 144 communicating with the mounting cavity 142, and the lens 22 is mounted at the through hole 144 in a seal manner. Of course, in another embodiment, a light transmitting cover may also be mounted at the through hole 144. In still another embodiment, at least a portion of casing of the handle 14 is made of light transmitting material.

In these embodiments, the mounting cavity 142 is able to be disposed in the handle 14 and then the projection assembly 2 is able to be mounted in the mounting cavity 142, such that the hidden mounting of the projection assembly 2 is able to be achieved by the handle 14. Specifically, in a specific embodiment, a through hole 144 may be disposed on the handle 14 to achieve the emission of light. At this time, on the one hand, the lens 22 may be mounted at the through hole 144 to achieve the block of the through hole 144, on the other hand, a light transmitting cover may be additionally disposed at the through hole 144. Of course, the through hole 144 may not be disposed on the handle 14, and the handle 14 may be directly disposed to be a light transmitting structure, or the portion corresponding to the lens 22 of handle 14 may be directly disposed to be a light transmitting structure.

In any one of the above embodiments, preferably, the appliance body 1 further comprises: a heating assembly (not shown) mounted on the container body 12; and the power supply apparatus 16 which is connected to the heating assembly and capable of supplying power to the heating assembly and the projection assembly 2.

In these embodiments, the appliance body 1 further comprises a heating assembly and the power supply apparatus 16, wherein the heating assembly is specifically for heating, and the power supply apparatus 16 is primarily for supplying power. The power supply apparatus 16 here may be a battery and the like, or may be a power plug that is able to be plugged into a socket at home.

In any one of the above embodiments, preferably, as shown in Fig. 6, the heating appliance further comprises the adjustment assembly 6 connected between the projection assembly 2 and the power supply apparatus 16 for adjusting current and voltage delivered to the projection assembly 2 from the power supply apparatus 16.

In these embodiments, the adjustment assembly 6 can be disposed between the power supply apparatus 16 and the projection assembly 2, for example between the power supply apparatus 16 and the light emitting source 244, such that the adjustment assembly 6 is able to specifically adjust voltage and current delivered to the light emitting source 244 and the like from the power supply apparatus 16. In this way, the voltage and current on the light emitting source 244 and the like are able to be ensured to meet the rated requirements, and the phenomenon that the light emitting source 244 is burned out due to the excessive voltage and current does not occur.

In any one of the above embodiments, preferably, as shown in Fig. 6, the adjustment assembly 6 comprises the diode 62 and the resistor 64, and both the diode 62 and the resistor 64 are connected in series between the projection assembly 2 and the power supply apparatus 16; or the adjustment assembly 6 comprises an electronic control board that is connected between the power supply apparatus 16 and the projection assembly 2.

In these embodiments, the adjustment assembly 6 comprises the diode 62 and the resistor 64. The rectification is able to be performed by connecting in series the diode on the loop of the light emitting source 244, while the voltage is able to be reduced by connecting in series the resistor 64. Thus, after rectification and voltage reduction of the diode 62 and the resistor 64, voltages and currents required for the light emitting source 244 and the like are able to be obtained. In another solution, when the product itself is provided with an electronic control board and the like, the power supply apparatus 16 is able to be first connected to the electronic control board, and then the electronic control board supplies power to the light emitting source 244 and the like. In this way, the control of the voltage and current are able to be achieved directly by the electronic control board, so that voltages and currents required for the light emitting source 244 and the like are able to be obtained.

In another embodiment described above, preferably, the power supply apparatus 16 is a power plug (not shown) that is able to be connected to an external power supply, or the power supply apparatus 16 is a battery.

In these embodiments, a power plug is able to be disposed on the appliance body 1, so that the product is able to be supplied with power by a connection of the power plug with mains supply such as a socket at home. Of course, in another solution, a battery may be disposed on the appliance body 1, and then the light emitting source 244 and the like of the projection assembly 2 may be supplied with power by the battery.

In any one of the above embodiments, preferably, the appliance body 1 comprises a power switch (not shown), the power switch is connected to the projection assembly 2, when the power switch is turned on, the projection assembly 2 is powered on to work, and when the power switch is turned off, the projection assembly 2 is powered off and does not work.

In these embodiments, a power switch is able to be disposed on the appliance body 1 to achieve power-on control of the product, and at this time, the projection assembly 2 is able to be directly connected to the power switch so that the synchronous opening or the synchronous closing of the projection assembly 2 is able to be achieved directly by the power switch. Thus, the projection assembly 2 is able to be powered on to work when the power switch is turned on, and the projection assembly 2 is also powered off synchronously when the power switch is turned off.

In another embodiment described above, preferably, the heating appliance further comprises a projection switch (not shown) which is connected to the projection assembly 2 and is able to control the opening and closing of the projection assembly 2.

In these embodiments, a projection switch is dedicatedly provided for the projection assembly 2, so that the individual control of the projection assembly 2 is able to be achieved by the projection switch without bundling control with the power-on condition of the product. Thus, projection display can be performed when the product is completely powered off, or can be stopped during product operation, so that the opening and closing of the projection assembly 2 is able to be more flexible and optional, without being affected by the power-on condition of the product itself.

In any one of the above embodiments, preferably, as shown in Fig. 1, the number of projection assemblies 2 is one, or as shown in Fig. 4, the number of projection assemblies 2 is multiple.

In these embodiments, the number of projection assemblies 2 can be set according to actual needs, for example, it can be set as one, two or more. By disposing a plurality of projection assemblies 2, multiple projection displays are able to be achieved, thereby making the projection display of the product more complete and rich.

In any one of the above embodiments, preferably, as shown in Figs. 12 and 13, the projection assembly 2 is movably mounted on the appliance body 1, and the projection size of the projection assembly 2 and/or the projection angle of the projection assembly 2 are able to be adjusted by the movement of the projection assembly 2.

In these embodiments, the projection assembly 2 is able to be movably mounted on the appliance body 1 such that the projection angle and projection size of the projection assembly 2 is able to be changed by the overall activity of the projection assembly 2 to better satisfy the client needs. Specifically, the projection assembly 2 is able to be either mounted on the appliance body 1 in a vertically movable manner, or mounted on the appliance body 1 in a laterally movable manner.

In any one of the above embodiments, preferably, as shown in Fig. 12 and Fig. 13, the heating appliance further comprises: the adjustment bracket 7 mounted on the appliance body 1, and the projection assembly 2 is mounted on the appliance body 1 by the adjustment bracket 7; wherein the projection assembly 2 is able to be driven to move by the adjustment bracket 7.

In these embodiments, the adjustment bracket 7 may be disposed on the appliance body 1, and then the disposition of the projection assembly 2 is specifically adjusted by the adjustment bracket 7. The adjustment bracket 7 is preferably disposed in the up and down direction to adjust the height of the projection assembly 2 upward and downward. Of course, the adjustment bracket 7 can also be disposed in the horizontal direction to achieve positional adjustment of the projection assembly 2 in the horizontal direction.

Of course, in another solution, the adjustment bracket 7 may not be disposed, and the projection assembly 2 is directly movably mounted on the appliance body 1.

In any one of the above embodiments, preferably, as shown in Figs. 12 and 13, the adjustment bracket 7 is movable in the longitudinal direction of the heating appliance to adjust the height of the projection assembly 2 in the longitudinal direction of the appliance body 1; and/or the adjustment bracket 7 is movable in the lateral direction of the heating appliance to adjust the position of the projection assembly 2 in the lateral direction of the appliance body 1(not shown in this embodiment); and/or the adjustment bracket 7 is rotatably mounted on the appliance body 1.

In these embodiments, the adjustment bracket 7 may preferably be disposed as a movable structure movable in the height direction, so that the height adjustment of the projection assembly 2 in the longitudinal direction of the appliance body 1 is able to be achieved by the movement of the adjustment bracket 7, so as to be able to change the projection distance and achieve the size adjustment of the projection. Of course, when it is necessary to laterally adjust the position of the projection assembly 2, the adjustment bracket 7 can also be disposed as a structure movable in the lateral direction, to achieve positional adjustment of the projection assembly 2 in the lateral direction of the appliance body 1. Furthermore, the adjustment bracket 7 can also be rotatably mounted on the appliance body 1, so that the projection angle of the projection assembly 2 is able to be adjusted.

In any one of the above embodiments, preferably, the movement stroke of the adjustment bracket 7 in the longitudinal direction of the heating appliance is greater than 0 mm and less than or equal to 30 mm; the adjustment bracket 7 is vertically movable in the longitudinal direction of the heating appliance.

In these embodiments, the stroke at which the adjustment bracket 7 is able to move in the longitudinal direction should be neither too large, nor too small, and preferably in a range of greater than 0 mm and less than or equal to 30 mm, so that the height at which the projection assembly 2 is able to be adjusted is relatively moderate. The adjustment bracket 7 is preferably vertically movable in the longitudinal direction of the heating appliance, so that the vertical lift of the projection assembly 2 in height is able to be achieved. Therefore, it is unnecessary to change the lateral position of the projection assembly 2, so that the projection assembly 2 is able to still achieve the projection in the original position after adjustment. That is, this disposition will only change the size of the projection 8, and will not change the position of the projection 8.

In any one of the above embodiments, preferably, the angle by which the adjustment bracket 7 is able to be rotated is greater than 0° and less than or equal to 360°.

In these embodiments, the angle by which the adjustment bracket 7 is able to be rotated can be set between 0° and 360° according to actual needs, so that the adjustment bracket 7 is able to be rotated and adjusted by a larger angle. Therefore, the projection assembly 2 is able to be rotated to different directions to perform projection, so that the selection of the projection position is more flexible and convenient.

In any one of the above embodiments, preferably, as shown in Figs. 12 and 13, the appliance body 1 comprises the handle 14 in which the mounting cavity 142 is disposed, and the handle 14 is provided with the through hole 144 communicating with the mounting cavity 142. The adjustment bracket 7 is mounted in the mounting cavity 142, and the projection assembly 2 is mounted on the adjustment bracket 7 and is able to extend out of the through hole 144 or retract into the mounting cavity 142 under the action of the adjustment bracket 7.

In these embodiments, the mounting cavity 142 is disposed in the handle 14, the handle 14 is provided with a through hole 144, the adjustment bracket 7 is mounted in the mounting cavity 142, and the projection assembly 2 is mounted on the adjustment bracket 7. Thus, the projection assembly 2 is able to extend out of the through hole 144 or retract into the mounting cavity 142 by the adjustment bracket 7, to achieve height position adjustment of the projection assembly 2, so that the projection size of the projection assembly 2 is able to be appropriately adjusted.

In any one of the above embodiments, preferably, the heating appliance is a liquid heating container such as an electric kettle, or the heating appliance is a cooking appliance such as a rice cooker.

In the description of the present specification, the terms "first" and "second" are merely for descriptive purposes but cannot be understood as indicating or implying relative importance, unless otherwise explicitly specified and limited; the terms "connection", "mounting", "fixing", and the like should be understood broadly. For example, "connection" may be a fixed connection, a detachable connection, or an integrated connection; "connection" may be a direct connection or an indirect connection through an intermediate medium. The specific meanings of the above terms in the present invention can be understood by those skilled in the art according to specific cases.

In the description of the present specification, the description of the terms "one embodiment", "some embodiments", "specific embodiments" and the like means that the specific features, structures, material, or characteristics described in combination with the embodiments or examples are contained in at least one embodiment or example of the present invention. In the present specification, the schematic representation of the above terms does not necessarily refer to the same embodiment or example. Furthermore, the specific features, structures, material or characteristics described may be combined in a suitable manner in any one or more embodiments or examples.

The above are only the preferable embodiments of the present invention, and are not intended to limit the present invention, without departing from the scope of the invention as defined by the appended claims.

## Claims

1. A heating appliance, comprising:
an appliance body (1); and
a projection assembly (2) which is mounted on the appliance body (1) and is able to project a projection toward an outside of the appliance body (1);
wherein the projection assembly (2) comprises:
a lens (22); and
a display apparatus (24) which is able to emit projection light rays and irradiate the lens (22) with the projection light rays to form the projection outside the appliance body (1) by the lens (22);
wherein the display apparatus (24) comprises a light transmitting member (242) and a light emitting source (244),
the light transmitting member (242) is provided with information to be projected, the light emitting source (244), the light transmitting member (242), and the lens (22) are sequentially spaced apart along the same direction, and light rays emitted by the light emitting source (244) are able to be shined onto the light transmitting member (242), and are able to be shined onto the lens (22) through the light transmitting member (242);
**characterized in that**
the light transmitting member (242) is provided with a plurality of areas, each of which is provided with the information to be projected, and the light from the light emitting source (244) is able to be shined onto at least one area on the light transmitting member (242),
wherein the light transmitting member (242) is able to move relative to the light emitting source (244), and the irradiation area of the light emitting source (244) on the light transmitting member (242) is able to be adjusted by movement of the light transmitting member (242); and
wherein the projection assembly (2) is movably mounted on the appliance body (1), and the projection size of the projection assembly (2) and/or the projection angle of the projection assembly (2) is able to be adjusted by the movement of the projection assembly (2).

2. The heating appliance according to claim 1,
wherein,
the light transmitting member (242) is made of light transmitting material, the light transmitting member (242) is provided with opaque patterns or characters; or, the light transmitting member (242) is made of non-light-transmitting material, the light transmitting member (242) is provided with a light transmission hole, and the light transmission hole is able to form at least one character and/or at least one pattern.

3. The heating appliance according to claim 1 or 2, wherein the light transmitting member (242) is a display screen on which the information to be projected is able to be displayed, and the heating appliance further comprises:
an information supply member which is connected to the display screen, and is able to transfer one or more kinds of the information to be projected to the display screen, and is able to change the information to be projected on the display screen, wherein,
the information supply member comprises preferably a collecting apparatus and an electronic control board,
wherein the collecting apparatus comprises preferably any one kind or more kinds of a temperature detecting member, a TDS detecting apparatus, a movement sensor, a liquid level detecting member, and a pressure sensor.

4. The heating appliance according to any one of claims 1 to 3,
wherein,
the plurality of areas on the light transmitting member (242) are disposed along a circumferential direction of the light transmitting member (242), and the light transmitting member (242) is rotatably mounted on the appliance body (1); or
the plurality of areas on the light transmitting member (242) are disposed along a lateral direction of the light transmitting member (242), and the light transmitting member (242) is slidably mounted on the appliance body (1) along the lateral direction.

5. The heating appliance according to any one of claims 1 to 4, further comprising:
a driving member which is mounted on the appliance body (1), is connected to the light transmitting member (242) and is able to drive the light transmitting member (242) to move,
wherein the driving member comprises a manual member and/or an automatic member.

6. The heating appliance according to any one of claims 1 to 5, wherein,
the light transmitting member (242) is rotatably mounted on the appliance body (1), the driving member comprises the manual member, the manual member comprises a plurality of protrusions (3) which are spaced apart in the circumferential direction of the light transmitting member (242), and the plurality of protrusions (3) are able to drive the light transmitting member (242) to rotate; or
the light transmitting member (242) is rotatably mounted on the appliance body (1), a plurality of first transmission gears (2422) are disposed in the circumferential direction of the light transmitting member (242), the driving member comprises the manual member, the manual member comprises a first rotary disk (4), the first rotary disk (4) is rotatably mounted on the appliance body (1), at least a portion of the first rotary disk (4) is exposed outside the appliance body (1), the first rotary disk (4) is provided with a second transmission gear (42) that cooperates with the first transmission gear (2422), and the rotation of the first rotation disk (4) is able to drive the light transmission member (242) to rotate; or
the light transmitting member (242) is rotatably mounted on the appliance body (1), the driving member comprises the manual member, the manual member comprises a second rotary disk (52) and a connecting shaft (54), the second rotary disk (52) is rotatably mounted on the appliance body (1), at least a portion of the second rotary disk (52) is exposed outside the appliance body (1), and the connecting shaft (54) is connected between the second rotary disk (52) and the light transmitting member (242).

7. The heating appliance according to any one of claims 1 to 6, wherein,
the distance between the light transmitting member (242) and the lens (22) is v, and the focal length of the lens (22) is f, wherein 2f>v>f; and/or
the light emitting source (244) is able to emit light of a plurality of colors or the light emitting source (244) comprises a plurality of light sources of different colors; and/or
the light emitting source (244), the light transmitting member (242), and the lens (22) are mounted on the same straight line; and/or
the light emitting source (244) is a LED lamp; and/or
the lens (22) is a convex lens or a plane mirror.

8. The heating appliance according to any one of claims 1 to 7, further comprising:
a projection screen which is mounted on the appliance body (1) and used for carrying the projection generated by the projection assembly (2).

9. The heating appliance according to any one of claims 1 to 8, wherein the appliance body (1) comprises:
a container body (12);
a handle (14) disposed on the container body (12), the projection assembly (2) being mounted on the handle (14), wherein,
a mounting cavity (142) is preferably disposed in the handle (14), and the projection assembly (2) is mounted in the mounting cavity (142),
wherein the handle (14) is preferably provided with a through hole (144) communicating with the mounting cavity (142), the lens (22) is preferably mounted at the through hole (144) in a sealed manner, or a light transmitting cover is preferably mounted at the through hole (144); or
at least a portion of a casing of the handle (14) is preferably made of light transmitting material.

10. The heating appliance according to any one of claims 1 to 9, wherein the appliance body (1) further comprises:
a heating assembly mounted on the container body (12);
a power supply apparatus (16) which is connected to the heating assembly and capable of supplying power to the heating assembly and the projection assembly (2).

11. The heating appliance according to any one of claims 1 to 10, further comprising:
an adjustment assembly (6) which is connected between the projection assembly (2) and the power supply apparatus (16) and used for adjusting current and voltage delivered to the projection assembly (2) from the power supply apparatus, wherein,
the adjustment assembly (6) comprises preferably a diode (62) and a resistor (64), and both of the diode (62) and the resistor (64) are preferably connected in series between the projection assembly (2) and the power supply apparatus; or
the adjustment assembly (6) comprises preferably an electronic control board which is connected between the power supply apparatus (16) and the projection assembly (2).

12. The heating appliance according to any one of claims 1 to 11, wherein,
the appliance body (1) comprises a power switch, the power switch is connected to the projection assembly (2), when the power switch is turned on, the projection assembly (2) is powered on to work, and when the power switch is turned off, the projection assembly (2) is powered off and does not work; and/or
the heating appliance further comprises a projection switch which is connected to the projection assembly (2) and is able to control on and off of the projection assembly (2), and/or,
wherein,
the number of the projection assemblies (2) is one or more.

13. The heating appliance according to any one of claims 1 to 12, further comprising:
an adjustment bracket (7) mounted on the appliance body (1), the projection assembly (2) being mounted on the appliance body (1) by the adjustment bracket (7),
wherein the projection assembly (2) is able to be driven to move by the adjustment bracket (7), wherein,
the adjustment bracket (7) is preferably movable in a longitudinal direction of the heating appliance to adjust a height of the projection assembly (2) in a longitudinal direction of the appliance body (1); and/or
the adjustment bracket (7) is preferably movable in a lateral direction of the heating appliance to adjust a position of the projection assembly (2) in a lateral direction of the appliance body (1); and/or
the adjustment bracket (7) is preferably rotatably mounted on the appliance body (1).

14. The heating appliance according to claim 13, wherein,
a distance of the movement of the adjustment bracket (7) in the longitudinal direction of the heating appliance is greater than 0 mm and less than or equal to 30 mm,
the adjustment bracket (7) is vertically movable in the longitudinal direction of the heating appliance; and/or
the angle by which the adjustment bracket (7) is able to be rotated is greater than 0° and less than or equal to 360°, and/or,
wherein,
the appliance body (1) comprises a handle (14) in which a mounting cavity (142) is disposed, the handle (14) is provided with a through hole (144) communicating with the mounting cavity (142), the adjustment bracket (7) is mounted in the mounting cavity (142), the projection assembly (2) is mounted on the adjustment bracket (7) and is able to extend out of the through hole (144) or retract into the mounting cavity (142) under the action of the adjustment bracket (7).

## Patentansprüche

1. Heizvorrichtung, umfassend:
einen Vorrichtungskörper (1); und
eine Projektionsanordnung (2), die an dem Vorrichtungskörper (1) befestigt ist und in der Lage ist, eine Projektion zu einer Außenseite des Vorrichtungskörpers (1) zu projizieren.
wobei die Projektionsanordnung (2) Folgendes umfasst:
eine Linse (22); und
eine Anzeigevorrichtung (24), die in der Lage ist, Projektionslichtstrahlen zu emittieren und die Linse (22) mit den Projektionslichtstrahlen zu bestrahlen, um die Projektion außerhalb des Vorrichtungskörpers (1) durch die Linse (22) auszubilden;
wobei die Anzeigevorrichtung (24) ein lichtübertragendes Element (242) und eine lichtemittierende Quelle (244) umfasst,
wobei das lichtübertragende Element (242) mit zu projizierenden Informationen versehen ist, die lichtemittierende Quelle (244), das lichtübertragende Element (242) und die Linse (22) sequentiell entlang der gleichen Richtung beabstandet sind, und Lichtstrahlen, die von der lichtemittierenden Quelle (244) emittiert werden, auf das lichtübertragende Element (242) gestrahlt werden können, und durch das lichtübertragende Element (242) auf die Linse (22) scheinen können, **dadurch gekennzeichnet, dass**
das lichtübertragende Element (242) mit einer Vielzahl von Bereichen versehen ist, von denen jeder mit der zu projizierenden Information versehen ist, und das Licht von der lichtemittierenden Quelle (244) auf mindestens einen Bereich auf dem lichtübertragenden Element (242) scheinen kann,
wobei das lichtübertragende Element (242) in der Lage ist, sich relativ zu der lichtemittierenden Quelle (244) zu bewegen, und der Bestrahlungsbereich der lichtemittierenden Quelle (244) auf dem lichtübertragenden Element (242) durch Bewegung des lichtübertragenden Elements (242) eingestellt werden kann, und
wobei die Projektionsanordnung (2) beweglich an dem Vorrichtungskörper (1) befestigt ist, und die Projektionsfläche der Projektionsanordnung (2) und/oder der Projektionswinkel der Projektionsanordnung (2) durch Bewegung der Projektionsanordnung (2) eingestellt werden kann

2. Heizvorrichtung gemäß Anspruch 1
wobei
das lichtübertragende Element (242) aus lichtübertragendem Material hergestellt ist, das lichtübertragende Element (242) mit undurchsichtigen Mustern oder Zeichen versehen ist; oder das lichtübertragende Element (242) aus nicht lichtübertragendem Material hergestellt ist, das lichtübertragende Element (242) mit einem lichtübertragenden Loch versehen ist, und das lichtübertragende Loch in der Lage ist, mindestens ein Zeichen und/oder mindestens ein Muster auszubilden.

3. Heizvorrichtung gemäß Anspruch 1 oder 2, wobei das lichtübertragende Element (242) ein Anzeigebildschirm ist, auf dem die zu projizierende Information angezeigt werden kann, und die Heizvorrichtung ferner Folgendes umfasst:
ein Informationsbereitstellungselement, das mit dem Anzeigebildschirm verbunden ist und in der Lage ist, eine oder mehrere Arten der zu projizierenden Informationen auf den Anzeigebildschirm zu übertragen, und in der Lage ist, die auf den Anzeigebildschirm zu projizierende Information zu ändern, wobei
das Informationsbereitstellungselement vorzugsweise eine Sammelvorrichtung und eine elektronische Steuerplatine umfasst,
wobei die Sammelvorrichtung vorzugsweise eine Art oder mehrere Arten eines Temperaturerfassungselements, einer TDS-Erfassungsvorrichtung, eines Bewegungssensors, eines Flüssigkeitspegelerfassungselements und eines Drucksensors umfasst.

4. Heizvorrichtung gemäß einem der Ansprüche 1 bis 3,
wobei
die Vielzahl von Bereichen auf dem lichtübertragenden Element (242) entlang einer Umfangsrichtung des lichtübertragenden Elements (242) angeordnet sind, und das lichtübertragende Element (242) drehbar an dem Vorrichtungskörper (1) befestigt ist; oder
die Vielzahl von Bereichen auf dem lichtübertragenden Element (242) entlang einer seitlichen Richtung des lichtübertragenden Elements (242) angeordnet sind, und das lichtübertragende Element (242) verschiebbar an dem Vorrichtungskörper (1) entlang der seitlichen Richtung befestigt ist.

5. Heizvorrichtung gemäß einem der Ansprüche 1 bis 4, ferner umfassend:
ein Antriebselement, das an dem Vorrichtungskörper (1) befestigt ist, mit dem lichtübertragenden Element (242) verbunden ist und in der Lage ist, das lichtübertragende Element (242) anzutreiben, sich zu bewegen,
wobei das Antriebselement ein manuelles Element und/oder ein automatisches Element umfasst.

6. Heizvorrichtung gemäß einem der Ansprüche 1 bis 5, wobei
das lichtübertragende Element (242) drehbar an dem Vorrichtungskörper (1) befestigt ist, das Antriebselement das manuelle Element umfasst, das manuelle Element eine Vielzahl von Vorsprüngen (3) umfasst, die in der Umfangsrichtung des lichtübertragenden Elements (242) beabstandet sind, und die Vielzahl von Vorsprüngen (3) das lichtübertragende Element (242) antreiben kann, sich zu drehen; oder
das lichtübertragende Element (242) drehbar an dem Vorrichtungskörper (1) befestigt ist, eine Vielzahl von ersten Übertragungszahnrädern (2422) in der Umfangsrichtung des lichtübertragenden Elements (242) angeordnet ist, das Antriebselement das manuelle Element umfasst, das manuelle Element eine erste Drehscheibe (4) umfasst, die erste Drehscheibe (4) drehbar an dem Vorrichtungskörper (1) befestigt ist, mindestens ein Bereich der ersten Drehscheibe (4) außerhalb des Vorrichtungskörpers (1) freigelegt ist, die erste Drehscheibe (4) mit einem zweiten Übertragungszahnrad (42) versehen ist, das mit dem ersten Übertragungszahnrad (2422) zusammenwirkt, und die Drehung der ersten Drehscheibe (4) in der Lage ist, das lichtübertragende Element (242) anzutreiben, sich zu drehen; oder
das lichtübertragende Element (242) drehbar an dem Vorrichtungskörper (1) befestigt ist, das Antriebselement das manuelle Element umfasst, das manuelle Element eine zweite Drehscheibe (52) und eine Verbindungswelle (54) umfasst, die zweite Drehscheibe (52) drehbar an dem Vorrichtungskörper (1) befestigt ist, mindestens ein Bereich der zweiten Drehscheibe (52) außerhalb des Vorrichtungskörpers (1) freigelegt ist und die Verbindungswelle (54) zwischen der zweiten Drehscheibe (52) und dem lichtübertragenden Element (242) verbunden ist.

7. Heizvorrichtung gemäß einem der Ansprüche 1 bis 6, wobei
der Abstand zwischen dem lichtübertragenden Element (242) und der Linse (22) v ist und die Brennweite der Linse (22) f ist, wobei 2f>v>f; und/oder die lichtemittierende Quelle (244) in der Lage ist, Licht einer Vielzahl von Farben zu emittieren, oder die lichtemittierende Quelle (244) eine Vielzahl von Lichtquellen unterschiedlicher Farben umfasst; und/oder
die lichtemittierende Quelle (244), das lichtübertragende Element (242) und die Linse (22) auf derselben geraden Linie befestigt sind; und/oder die lichtemittierende Quelle (244) eine LED-Lampe ist; und/oder die Linse (22) eine konvexe Linse oder ein Planspiegel ist.

8. Heizvorrichtung gemäß einem der Ansprüche 1 bis 7, ferner umfassend:
einen Projektionsbildschirm, der an dem Vorrichtungskörper (1) befestigt ist und zum Übertragen der von der Projektionsanordnung (2) erzeugten Projektion verwendet wird.

9. Heizvorrichtung gemäß einem der Ansprüche 1 bis 8, wobei der Vorrichtungskörper (1) Folgendes umfasst:
einen Behälterkörper (12);
einen Griff (14), der an dem Behälterkörper (12) angeordnet ist, wobei die Projektionsanordnung (2) an dem Griff (14) befestigt ist, wobei,
ein Befestigungshohlraum (142) vorzugsweise in dem Griff (14) angeordnet ist, und die Projektionsanordnung (2) in dem Befestigungshohlraum (142) befestigt ist,
wobei der Griff (14) vorzugsweise mit einem Durchgangsloch (144) versehen ist, das mit dem Befestigungshohlraum (142) in Verbindung steht, die Linse (22) vorzugsweise an dem Durchgangsloch (144) auf abgedichtete Weise befestigt ist, oder eine lichtübertragende Abdeckung vorzugsweise am Durchgangsloch (144) befestigt ist; oder
mindestens ein Bereich eines Gehäuses des Griffs (14) vorzugsweise aus lichtübertragendem Material hergestellt ist.

10. Heizvorrichtung gemäß einem der Ansprüche 1 bis 9, wobei der Vorrichtungskörper (1) ferner Folgendes umfasst:
eine am Behälterkörper (12) befestigte Heizanordnung;
eine Energieversorgungsvorrichtung (16), die mit der Heizanordnung verbunden ist und in der Lage ist, Energie an die Heizanordnung und die Projektionsanordnung (2) zu liefern.

11. Heizvorrichtung gemäß einem der Ansprüche 1 bis 10, ferner umfassend:
eine Einstellanordnung (6), die zwischen der Projektionsanordnung (2) und der Energieversorgungsvorrichtung (16) verbunden ist und zum Einstellen von Strom und Spannung verwendet wird, die von der Energieversorgungsvorrichtung an die Projektionsanordnung (2) geliefert werden, wobei,
die Einstellanordnung (6) vorzugsweise eine Diode (62) und einen Widerstand (64) umfasst, und sowohl die Diode (62) als auch der Widerstand (64) vorzugsweise zwischen der Projektionsanordnung (2) und der Energieversorgungsvorrichtung in Reihe geschaltet sind; oder
die Einstellanordnung (6) vorzugsweise eine elektronische Steuerplatine umfasst, die zwischen der Energieversorgungsvorrichtung (16) und der Projektionsanordnung (2) verbunden ist.

12. Heizvorrichtung gemäß einem der Ansprüche 1 bis 11, wobei
der Vorrichtungskörper (1) einen Netzschalter umfasst, der Netzschalter mit der Projektionsanordnung (2) verbunden ist, wenn der Netzschalter eingeschaltet ist, die Projektionsanordnung (2) eingeschaltet ist, zu funktionieren, und wenn der Netzschalter ausgeschaltet ist, die Projektionsanordnung (2) ausgeschaltet ist und nicht funktioniert; und/oder die Heizvorrichtung ferner einen Projektionsschalter umfasst, der mit der Projektionsanordnung (2) verbunden ist und in der Lage ist, die Projektionsanordnung (2) ein- und auszuschalten, und/oder,
wobei
die Anzahl der Projektionsanordnungen (2) eins oder mehrere ist.

13. Heizvorrichtung gemäß einem der Ansprüche 1 bis 12, ferner umfassend:
eine an dem Vorrichtungskörper (1) befestigte Einstellhalterung (7), wobei die Projektionsanordnung (2) durch die Einstellhalterung (7) an dem Vorrichtungskörper (1) befestigt ist,
wobei die Projektionsanordnung (2) durch die Einstellhalterung (7) angetrieben werden kann, sich zu bewegen, wobei,
die Einstellhalterung (7) vorzugsweise in einer Längsrichtung der Heizvorrichtung bewegbar ist, um eine Höhe der Projektionsanordnung (2) in einer Längsrichtung des Vorrichtungskörpers (1) einzustellen; und/oder die Einstellhalterung (7) vorzugsweise in einer seitlichen Richtung der Heizvorrichtung bewegbar ist, um eine Position der Projektionsanordnung (2) in einer seitlichen Richtung des Vorrichtungskörpers (1) einzustellen; und/oder die Einstellhalterung (7) vorzugsweise drehbar am Vorrichtungskörper (1) befestigt ist.

14. Heizvorrichtung gemäß Anspruch 13, wobei
ein Abstand der Bewegung der Einstellhalterung (7) in der Längsrichtung der Heizvorrichtung größer als 0 mm und kleiner oder gleich 30 mm ist,
die Einstellhalterung (7) in der Längsrichtung der Heizvorrichtung vertikal bewegbar ist; und/oder
der Winkel, um den die Einstellhalterung (7) gedreht werden kann, größer als 0° und kleiner oder gleich 360° ist, und/oder,
wobei der Vorrichtungskörper (1) einen Griff (14) umfasst, in dem ein Befestigungshohlraum (142) angeordnet ist, der Griff (14) mit einem Durchgangsloch (144) versehen ist, das mit dem Befestigungshohlraum (142) in Verbindung steht, die Einstellhalterung (7) in dem Befestigungshohlraum (142) befestigt ist, die Projektionsanordnung (2) an der Einstellhalterung (7) befestigt ist und unter der Wirkung der Einstellhalterung (7) aus dem Durchgangsloch (144) herausragen oder in den Befestigungshohlraum (142) einfahren kann.

## Revendications

1. Appareil de chauffage comprenant :
un corps d'appareil (1) ; et
un ensemble de projection (2) monté sur le corps d'appareil (1) et capable de projeter une projection vers un extérieur du corps d'appareil (1) ;
dans lequel l'ensemble de projection (2) comprend :
une lentille (22) ; et
un appareil d'affichage (24) capable d'émettre des rayons lumineux de projection et d'irradier la lentille (22) avec les rayons lumineux de projection pour former la projection à l'extérieur du corps d'appareil (1) par la lentille (22) ;
dans lequel l'appareil d'affichage (24) comprend un élément de transmission de lumière (242) et une source d'émission de lumière (244),
l'élément de transmission de lumière (242) reçoit des informations à projeter, la source d'émission de lumière (244), l'élément de transmission de lumière (242) et la lentille (22) sont espacés séquentiellement le long de la même direction, et des rayons lumineux émis par la source d'émission de lumière (244) peuvent éclairer l'élément de transmission de lumière (242), et peuvent éclairer la lentille (22) à travers l'élément de transmission de lumière (242) ;
**caractérisé en ce que**
l'élément de transmission de lumière (242) est doté d'une pluralité de zones, dont chacune reçoit les informations à projeter, et la lumière venant de la source d'émission de lumière (244) peut éclairer au moins une zone de l'élément de transmission de lumière (242),
dans lequel l'élément de transmission de lumière (242) est capable de se déplacer par rapport à la source d'émission de lumière (244), et la zone d'irradiation de la source d'émission de lumière (244) sur l'élément de transmission de lumière (242) peut être ajustée par le déplacement de l'élément de transmission de lumière (242) ; et
dans lequel l'ensemble de projection (2) est monté de façon mobile sur le corps d'appareil (1), et la taille de projection de l'ensemble de projection (2) et/ou l'angle de projection de l'ensemble de projection (2) peut être ajusté par le déplacement de l'ensemble de projection (2).

2. Appareil de chauffage selon la revendication 1,
dans lequel
l'élément de transmission de lumière (242) est constitué d'un matériau transmettant la lumière, l'élément de transmission de lumière (242) est doté de motifs ou caractères opaques; ou l'élément de transmission de lumière (242) est constitué d'un matériau ne transmettant pas la lumière, l'élément de transmission de lumière (242) est doté d'un orifice de transmission de lumière, et l'orifice de transmission de lumière est capable de former au moins un caractère et/ou au moins un motif.

3. Appareil de chauffage selon la revendication 1 ou 2, dans lequel l'élément de transmission de lumière (242) est un écran d'affichage sur lequel les informations à projeter peuvent être affichées, et l'appareil de chauffage comprend en outre :
un élément de fourniture d'informations connecté à l'écran d'affichage et capable de transmettre une ou plusieurs sortes d'informations à projeter sur l'écran d'affichage, et capable de modifier les informations à projeter sur l'écran d'affichage, dans lequel
l'élément de fourniture d'informations comprend de préférence un appareil de collecte et un tableau de commande électronique,
dans lequel l'appareil de collecte comprend de préférence n'importe quel type ou plusieurs types parmi un élément de détection de température, un appareil de détection de TDS, un capteur de mouvement, un élément de détection de niveau de liquide, et un capteur de pression.

4. Appareil de chauffage selon l'une quelconque des revendications 1 à 3,
dans lequel
la pluralité de zones sur l'élément de transmission de lumière (242) sont disposées le long d'une direction circonférentielle de l'élément de transmission de lumière (242), et l'élément de transmission de lumière (242) est monté de façon rotative sur le corps d'appareil (1) ; ou
la pluralité de zones sur l'élément de transmission de lumière (242) sont disposées le long d'une direction latérale de l'élément de transmission de lumière (242), et l'élément de transmission de lumière (242) est monté de façon coulissante sur le corps d'appareil (1) le long de la direction latérale.

5. Appareil de chauffage selon l'une quelconque des revendications 1 à 4, comprenant en outre :
un élément d'entraînement monté sur le corps d'appareil (1), lequel est connecté à l'élément de transmission de lumière (242) et capable d'amener l'élément de transmission de lumière (242) à se déplacer,
dans lequel l'élément d'entraînement comprend un élément manuel et/ou un élément automatique.

6. Appareil de chauffage selon l'une quelconque des revendications 1 à 5, dans lequel
l'élément de transmission de lumière (242) est monté de façon rotative sur le corps d'appareil (1), l'élément d'entraînement comprend l'élément manuel, l'élément manuel comprend une pluralité de saillies (3) espacées dans la direction circonférentielle de l'élément de transmission de lumière (242), et la pluralité de saillies (3) sont capables d'entraîner l'élément de transmission de lumière (242) en rotation ; et
l'élément de transmission de lumière (242) est monté de façon rotative sur le corps d'appareil (1), une pluralité de premiers engrenages de transmission (2422) sont disposés dans la direction circonférentielle de l'élément de transmission de lumière (242), l'élément d'entraînement comprend l'élément manuel, l'élément manuel comprend un premier disque rotatif (4), le premier disque rotatif (4) est monté de façon rotative sur le corps d'appareil (1), une partie au moins du premier disque rotatif (4) est exposée à l'extérieur du corps d'appareil (1), le premier disque rotatif (4) est doté d'un deuxième engrenage de transmission (42) coopérant avec le premier engrenage de transmission (2422), et la rotation du premier disque rotatif (4) est capable d'entraîner l'élément de transmission de lumière (242) en rotation ; ou
l'élément de transmission de lumière (242) est monté de façon rotative sur le corps d'appareil (1), l'élément d'entraînement comprend l'élément manuel, l'élément manuel comprend un deuxième disque rotatif (52) et un arbre de connexion (54), le deuxième disque rotatif (52) est monté de façon rotative sur le corps d'appareil (1), une partie au moins du deuxième disque rotatif (52) est exposée à l'extérieur du corps d'appareil (1), et l'arbre de connexion (54) est connecté entre le deuxième disque rotatif (52) et l'élément de transmission de lumière (242).

7. Appareil de chauffage selon l'une quelconque des revendications 1 à 6, dans lequel
la distance entre l'élément de transmission de lumière (242) et la lentille (22) est v, et la longueur focale de la lentille (22) est f, où 2f > v > f ; et/ou
la source d'émission de lumière (244) est capable d'émettre de la lumière de plusieurs couleurs ou la source d'émission de lumière (244) comprend une pluralité de sources de lumières de différentes couleurs ; et/ou la source d'émission de lumière (244), l'élément de transmission de lumière (242) et la lentille (22) sont montés sur la même ligne droite ;
et/ou
la source d'émission de lumière (244) est une lampe à DEL ; et/ou
la lentille (22) est une lentille convexe ou un miroir plat.

8. Appareil de chauffage selon l'une quelconque des revendications 1 à 7, comprenant en outre :
un écran de projection monté sur le corps d'appareil (1) et utilisé pour porter la projection générée par l'ensemble de projection (2).

9. Appareil de chauffage selon l'une quelconque des revendications 1 à 8, dans lequel le corps d'appareil (1) comprend :
un corps de récipient (12) ;
une poignée (14) disposée sur le corps de récipient (12), l'ensemble de projection (2) étant monté sur la poignée (14), dans lequel
une cavité de montage (142) est disposée de préférence dans la poignée (14), et l'ensemble de projection (2) est monté dans la cavité de montage (142),
dans lequel la poignée (14) est de préférence dotée d'un trou traversant (144) communiquant avec la cavité de montage (142), la lentille (22) est de préférence montée de façon étanche au niveau du trou traversant (144), ou un couvercle transmettant la lumière est de préférence monté sur le trou traversant (144) ; ou
une partie au moins d'un boîtier de la poignée (14) est de préférence constituée d'un matériau transmettant la lumière.

10. Appareil de chauffage selon l'une quelconque des revendications 1 à 9, dans lequel le corps d'appareil (1) comprend en outre :
un ensemble de chauffage monté sur le corps de récipient (12) ;
un dispositif d'alimentation en puissance (16) connecté à l'ensemble de chauffage et capable de fournir de la puissance à l'ensemble de chauffage et à l'ensemble de projection (2).

11. Appareil de chauffage selon l'une quelconque des revendications 1 à 10, comprenant en outre :
un ensemble d'ajustement (6) connecté entre l'ensemble de projection (2) et le dispositif d'alimentation en puissance (16), utilisé pour ajuster le courant et la tension fournis à l'ensemble de projection (2) depuis le dispositif d'alimentation en puissance, dans lequel
l'ensemble d'ajustement (6) comprend de préférence une diode (62) et une résistance (64), et à la fois la diode (62) et la résistance (64) sont de préférence connectées en série entre l'ensemble de projection (2) et le dispositif d'alimentation en puissance ; ou
l'ensemble d'ajustement (6) comprend de préférence un panneau de commande électronique connecté entre le dispositif d'alimentation en puissance (16) et l'ensemble de projection (2).

12. Appareil de chauffage selon l'une quelconque des revendications 1 à 11, dans lequel
le corps d'appareil (1) comprend un commutateur de puissance, le commutateur de puissance est connecté à l'ensemble de projection (2), lorsque le commutateur de puissance est activé, l'ensemble de projection (2) est allumé pour fonctionner, et lorsque le commutateur de puissance est désactivé, l'ensemble de projection (2) est éteint et ne fonctionne pas ;
et/ou
l'appareil de chauffage comprend en outre un commutateur de projection connecté à l'ensemble de projection (2) et capable d'allumer et d'éteindre l'ensemble de projection (2), et/ou
dans lequel
le nombre d'ensembles de projection (2) est de un ou plus.

13. Appareil de chauffage selon l'une quelconque des revendications 1 à 12, comprenant en outre :
un support d'ajustement (7) monté sur le corps d'appareil (1), l'ensemble de projection (2) étant monté sur le corps d'appareil (1) par le biais du support d'ajustement (7),
dans lequel l'ensemble de projection (2) peut être entraîné en déplacement par le support d'ajustement (7), dans lequel
le support d'ajustement (7) est de préférence déplaçable dans une direction longitudinale de l'appareil de chauffage pour ajuster une hauteur de l'ensemble de projection (2) dans une direction longitudinale du corps d'appareil (1) ; et/ou
le support d'ajustement (7) est de préférence déplaçable dans une direction latérale de l'appareil de chauffage pour ajuster une position de l'ensemble de projection (2) dans une direction latérale du corps d'appareil (1) ; et/ou
le support d'ajustement (7) est de préférence monté de façon rotative sur le corps d'appareil (1).

14. Appareil de chauffage selon la revendication 13, dans lequel
une distance du déplacement du support d'ajustement (7) dans la direction longitudinale de l'appareil de chauffage est supérieure à 0 mm et inférieure ou égale à 30 mm,
le support d'ajustement (7) est déplaçable verticalement dans la direction longitudinale de l'appareil de chauffage ; et/ou
l'angle selon lequel le support d'ajustement (7) est capable de tourner est supérieur à 0° et inférieur ou égal à 360°, et/ou
dans lequel
le corps d'appareil (1) comprend une poignée (14) dans laquelle est disposée une cavité de montage (142), la poignée (14) est dotée d'un trou traversant (144) communiquant avec la cavité de montage (142), le support d'ajustement (7) est monté dans la cavité de montage (142), l'ensemble de projection (2) est monté sur le support d'ajustement (7) et capable de s'étendre à l'extérieur du trou traversant (144) ou de se rétracter dans la cavité de montage (142) sous l'action du support d'ajustement (7).
